⑲ ))) **Europäisches Patentamt**
**European Patent Office**
**Office européen des brevets**

(11) Veröffentlichungsnummer: **0 000 192**
**B1**

(12) **EUROPÄISCHE PATENTSCHRIFT**

(21) Anmeldenummer: **78100233.2**

(22) Anmeldetag: **23.06.78**

(51) Int. Cl.³: **F 24 J 3/04, F 25 B 29/00, A 47 L 15/42**

(54) **Wärmerückgewinnungseinrichtung für eine Spülanlage**

(30) Priorität: **01.07.77 DE 2729878**

(43) Veröffentlichungstag der Anmeldung:
**10.01.79 Patentblatt 79/01**

(45) Bekanntmachung des Hinweises auf die Patenterteilung:
**03.09.80 Patentblatt 80/18**

(84) Benannte Vertragsstaaten:
**BE CH DE FR GB NL SE**

(56) Entgegenhaltungen:
**CH - A - 263 607**
**CH - A - 329 164**
**CH - A - 340 322**
**DE - A - 307 388**
**DE - A - 1 628 500**
**DE - A - 2 027 347**
**DE - A - 2 448 818**
**DE - A - 2 525 176**
**DE - A - 2 643 173**
**FR - A - 914 832**
**FR - A - 1 591 346**
**FR - A - 2 059 693**
**US - A - 2 236 191**
**US - A - 3 789 860**
**US - A - 3 986 345**

(73) Patentinhaber: **Stierlen-Maquet Aktiengesellschaft**
**Kehler Strasse 31**
**D - 7550 Rastatt (DE)**

(72) Erfinder: **Schmidt, Berthold, Ing. (grad.)**
**Feierabendweg 1 c**
**D - 7500 Karlsruhe (DE)**
**Herzog, Siegfried**
**Münchfeldstrasse 45**
**D - 7550 Rastatt (DE)**
**Pilz, Erwin**
**verstorben Silcherstrasse 1**
**D - 7550 Rastatt (DE)**

(74) Vertreter: **Schulz-Dörlam, Wolfgang**
**Mauerkircherstrasse 31**
**D - 8000 München 80 (DE)**

Courier Press, Leamington Spa, England.

## Wärmerückgewinnungseinrichtung für eine Spülanlage

Die Erfindung bezieht sich auf eine Wärmerückgewinnungseinrichtung für eine Spülanlage mit mindesten einer Spülkammer und einer Nachspülkammer, in der das in der Spülkammer gereinigte Spülgut taktweise mit Heißwasser nachgespült wird, umfassend einen Verdichter für ein Arbeitsmittel, einen Verflüssiger, durch dessen Primärseite das vom Verdichter komprimierte und erhitzte Arbeitsmittel strömt und dessen Sekundärseite zur Erzeugung des Heißwassers mit zu erwärmendem Frischwasser von gegenüber der Siedetemperatur des Arbeitsmittels geringerer Temperatur gespeist ist, ein in den Strömungsweg des Arbeitsmittels hinter dem Verflüssiger eingeschaltetes erstes Drosselorgan zur Entspannung und Temperaturabsenkung des Arbeitsmittels, einen mit seiner Primärseite zwischen dem ersten Drosselorgan und dem Verflüssiger in den Strömungsweg des Arbeitsmittels eingeschalteten Verdampfer, dessen Sekundärseite von dem aus der Spülanlage entweichenden Dampf-Warmluft-Gemisch zu dessen Entwärmung beaufschlagt ist, einen Durchlauferhitzer für das erwärmte Frischwasser und einen Speicherbehälter.

Eine derartige Wärmerückgewinnungseinrichtung ist bekannt (DE - OS 26 43 173). Hierbei wird ein die Strömung des Frischwassers freigebendes Magnetventil beim Einlaufen von Spülgut in die Spülanlage betätigt, die Strömung des Frischwassers wird danach nicht verändert, und je nach der Wärmeabgabe des Verflüssigers wird das Frischwasser mehr oder weniger stark erwärmt, so daß während der gesamten Dauer, in der Frischwasser erwärmt wird, der Durchlauferhitzer eingeschaltet bleiben muß, um das Wasser auf die erforderliche Heißwassertemperatur zu erwärmen, bevor es in dem dem Durchlauferhitzer nachgeschalteten Speicherbehälter gesammelt wird. Dabei kann es auch vorkommen, daß die erforderliche Menge an Nachspülwasser überschritten wird, wobei unnötigerweise Heizenergie im Durchlauferhitzer verbraucht wird.

Der Erfindung liegt die Aufgabe zugrunde, die Bereitung des heißen Nachspülwassers zur Verwendung in der Nachspülkammer wirtschaftlicher zu gestalten.

Die Lösung dieser Aufgabe erfolgt gemäß der Erfindung bei einer Wärmerückgewinnungseinrichtung der eingangs genannten Art dadurch, daß die Strömung des zu erwärmenden Frischwassers in Abhängigkeit vom Druck des Arbeitsmittels am Eingang des Verflüssigers regelbar, der Speicherbehälter unmittelbar an die Sekundärseite des Verflüssigers angeschlossen und der Durchlauferhitzer zwischen dem Speicherbehälter und der Nachspülkammer eingeschaltet sowie nach seiner Ausgangstemperatur geregelt ist, und daß in Abhängigkeit von einem Mindestwasserstand im Speicherbehälter diesem und/oder der von ihm zur Nachspülkammer führenden Leitung Frischwasser zuführbar ist.

Bei der Wärmerückgewinnung gemäß der Erfindung wird durch die Regelung der Strömung des zu erwärmenden Frischwassers im Sinne eines Konstanthaltens des Drucks des Arbeitsmittels am Eingang des Verflüssigers zwar die Strömung, d.h. die Menge des erwärmten Frischwassers je Zeiteinheit verändert, nicht oder nur sehr wenig jedoch die Temperatur des erwärmten Frischwassers beim Austritt aus der Sekundärseite des Verflüssigers. Unter normalen Betriebsbedingungen wird so die gesamte Menge des erwärmten Frischwassers, die während eines Taktschrittes dem Speicherbehälter zugeführt wird, auf die erforderliche Temperatur des Nachspülwassers erhitzt, so daß eine Einschaltung des Durchlauferhitzers bei der anschließenden Zufuhr des Nachspülwassers zur Nachspülkammer nicht erforderlich ist. Nur wenn die dem Speicherbehälter zugeführte Menge an erwärmtem Frischwasser geringer ist als die erforderliche Menge an Nachspülwasser, die bei einem einzelnen Takt verbraucht wird, kann es erforderlich werden, dem Speicherbehälter zusätzlich nicht erwärmtes Frischwasser zuzuführen, wodurch die Temperatur des Wassers im Speicherbehälter abgesenkt und bei der anschließenden Verwendung von Nachspülwasser eine Einschaltung des Durchlauferhitzers erforderlich werden.

Ausgestaltungen der Erfindung sind in den Unteransprüchen angegeben.

Im folgenden wird die Erfindung anhand von mehrere Ausführungswege darstellenden Zeichnungen näher erläutert. Es zeigen

Fig. 1 in stark schematisiertem Längsschnitt eine Spülanlage mit einer nur teilweise dargestellten Wärmerückgewinnungseinrichtung;

Fig. 2 einen Teil der elektrischen Schaltung der Wärmerückgewinnungseinrichtung gemäß Fig. 1;

Fig. 3 eine Abwandlung der elektrischen Schaltung gemäß Figur 2;

Fig. 4 in gegenüber Fig. 1 noch stärker vereinfachtem Längsschnitt eine weitere Ausführungsform einer Spülanlage mit einer nur teilweise dargestellten Wärmerückgewinnungseinrichtung;

Fig. 5 einen Schnitt durch die Spülanlage gemäß Fig. 4 entlang der Linie V—V;

Fig. 6 in wiederum gegenüber Fig. 1 stärker vereinfachten Schnittdarstellung eine weitere Spülanlage mit einer teilweise dargestellten Wärmerückgewinnungseinrichtung;

Fig. 7 in schematisierter Seitenansicht eine weitere Spülanlage mit einer weiteren Ausführungsform einer Wärmerückgewinnungseinrichtung gemäß der Erfindung.

In den Figuren sind gleiche Teile oder zumindest hinsichtlich ihrer Funktion gleichartige Teile mit gleichen Bezugszeichen bezeichnet.

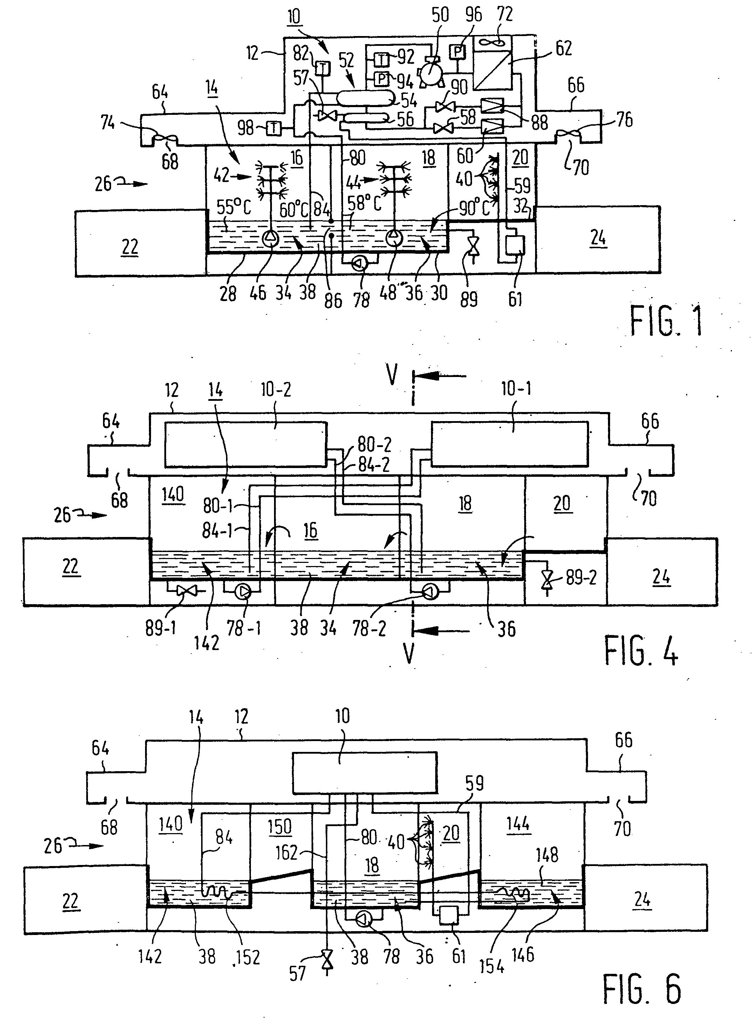

In Fig. 1 ist eine Wärmepumpe 10 in einem Gehäuse 12 untergebracht, das auf der Oberseite einer Spülmaschine 14 sitzt. Die Spülmaschine 14 besteht aus einer Anzahl aneinandergereihter Kammern zur Behandlung von nicht dargestelltem Spülgut, und die Anzahl der Kammern wird je nach Art des Spülguts und der je Zeiteinheit zu reinigenden Menge oder Anzahl gewählt. Von diesen je nach Anwendungsfall unterschiedlichen Gegebenheiten hängt es auch ab, ob das Spülgut kontinuierlich durch die Kammern hindurchgefördert wird oder ob die Förderung taktweise derart erfolgt, daß das Spülgut jeweils während einer vorgegebenen Zeit in einer Kammer verbleibt und behandelt wird, bevor es in die nächste Kammer weitertransportiert wird. Beim in Fig. 1 dargestellten Ausführungsbeispiel sind zwei gleichartige Spülkammern 16, 18 sowie eine in Förderrichtung hinter der zweiten Spülkammer 18 liegenden Nachspülkammer 20 vorgesehen, wie dies' beispielsweise beim Spülen von Geschirr zweckmäßig ist. Vor der ersten Spülkammer 16 liegt eine Eingabestation 22, wo verschmutztes Spülgut auf einen nicht gezeigten Förderer aufgegeben wird, der es in horizontaler Richtung geradlinig durch die Kammern 16, 18, 20 zu einer hinter der Nachspülkammer 20 angeordneten Entnahmestation 24 fördert. Die Förderrichtung ist durch einen Pfeil 26 angedeutet. Am Eingang und Ausgang der Kammern 16, 18, 20 sind jeweils nicht näher dargestellte Öffnungen vorgesehen, die den Durchtritt des Spülguts gestatten, und zumindest die der Eingabestation 22 zugewandte Eintrittsöffnung der Spülkammer 16 und die der Entnahmestation 24 zugewandte Austrittsöffnung der Nachspülkammer 20 können durch Verschlußelemente wie Klappen oder Türen solange verschließbar sein, wie kein Spülgut durch diese Öffnungen hindurchläuft.

Die Böden 28, 30, 32 der Kammern 16, 18, 20 sind zur Verdeutlichung verstärkt dargestellt. Im unteren Teil der Spülkammern 16, 18 bilden die Böden 28, 30 jeweils einen kastenartigen, zum Inneren der Spülkammer 16, 18 hin offenen Behälter 34, 36, der eine Reinigungsflotte 38 enthält. Der Boden 32 der Nachspülkammer 20 liegt so hoch und ist so angeordnet, daß das zum Nachspülen verwendete, aus Düsen 40 ausgesprühte heiße, reine Wasser in den Behälter 36 der zweiten Spülkammer 18 abläuft. In den Spülkammern 16, 18 sind Düsensysteme 42, 44 angeordnet, die die Reinigungsflotte 38 auf das Spülgut sprühen und hierzu von Pumpen 46, 48 gespeist werden, die die Reinigungsflotte 38 unmittelbar aus den Behältern 34, 36 entnehmen.

Beim Einlauf in die erste Spülkammer 16 hat das Spülgut die Umgebungstemperatur und entzieht daher der auf höherer Temperatur gehaltenen Reinigungsflotte 38 Wärme. In der zweiten Spülkammer 18 ist das Spülgut dagegen bereits gewärmt, und das der zweiten Spülkammer 18 aus der Nachspülkammer 20 mit einer Temperatur von annähernd 90°C zufließende Nachspülwasser bringt eine Wärmezufuhr zur zweiten Spülkammer 18. Ohne zusätzliche Maßnahmen würde sich daher in der ersten Spülkammer 16 eine wesentlich geringere Temparatur als in der zweiten Spülkammer 18 einstellen. In beiden Spülkammern 16, 18 sollen jedoch annähernd gleiche Temperaturen der Reinigungsflotte 38 herrschen, da die Spülwirkung mit zunehmender Temperatur verbessert wird und auch bereits in der ersten Spülkammer 16 eine wirksame Spülung erfolgen soll. Zur Anhebung der Temperatur der Reinigungsflotte 38 in der ersten Spülkammer 16 dient die Wärmepumpe 10, die die Abwärme aus dem aus der Eintrittsöffnung der ersten Spülkammer 16 und aus der Austrittsöffnung der Nachspülkammer 20 entweichenden Dampf-Warmluft-Gemisch zurückgewinnt.

Das in der Wärmepumpe 10 in einem Kreislauf geführte Arbeitsmittel ist beispielsweise Difluordichlormethan. Das Arbeitsmittel wird mittels eines Kompressors 50 verdichtet und in einen Verflüssiger 52 gedrückt, der als Wärmetauscher ausgebildet ist, um die Reinigungsflotte 38 zu erwärmen, und der im Ausführungsbeispiel aus einem Hauptkondensator 54 und einem Hilfskondensator 56 gebildet ist. Hauptkondensator 54 und Hilfskondensator 56 sind mit ihren vom Arbeitsmittel durchströmten Primärseiten unmittelbar hintereinandergeschaltet, während die Sekundärseite des Hauptkondensator 54 von der Reinigungsflotte 38 und die Sekundärseite des Hilfskondensators 56 von ihr über ein Ventil 57 zugeführtem Kaltwasser durchströmt sind. Im Hauptkondensator 54 gibt das Arbeitsmittel die Kompressionswärme und einen Teil der Kondensationswärme an die Reinigungsflotte 38 ab, während es im Hilfskondensator 56, der als Sammler und Unterkühler dient, einen restlichen Teil der Kondensationswärme und die Unterkühlungswärme an das Kaltwasser abgibt; letzteres wird nach seiner Erwärmung über eine Leitung 59 und einen fremderhitzten Durchlauferhitzer 61 den Düsen 40 der Nachspülkammer 20 zugeführt. Das im Verflüssiger 52 verflüssigte Arbeitsmittel gelangt andererseits über ein Absperrventil 58 und ein Drosselorgan in Gestalt eines Expansionsventils 60 zu einem wiederum als Wärmetauscher ausgebildeten Verdampfer 62, wo es auf einen relativ niedrigen Verdampferdruck entspannt verdampft und die zum Verdampfen erforderliche Wärme dem oberhalb der Eingabestation 22 und der Entnahmestation 24 abgesaugten Dampf-Warmluft-Gemisch entzieht. Das nunmehr dampfförmige Arbeitmittle wird über eine Saugleitung vom Kompressor 50 angesaugt, wo der vorstehend beschriebene Kreislauf erneut beginnt.

Zum Ansaugen des Dampf-Warmluft-Gemischs sind über die Vorderseite der ersten Spülkammer 16 bzw. über die Rückseite der Nachspülkammer 20 überkragende Kanäle 64, 66 mit auf den Unterseiten vorgesehenen Eintrittsöffnungen 68, 70 vorgesehen, die in das Gehäuse 12 der Wärmepumpe 10 münden. Die Absaugung durch die Sekundärseite des Verdampfers 62 hindurch erfolgt mittels eines diesem im Luftstrom nachgeschalteten, oberhalb von ihm angeordneten Ventilators 72. Insbesondere bei taktweisem Betrieb der Spülmaschine 14, bei dem die eingangsseitigen Verschlußorgane der ersten Spülkammer 16 und die ausgangsseitigen Verschlußorgane der Nachspülkammer 20 jeweils nur kurzzeitig geöffnet sind, können an den Eintrittsöffnungen 68, 70 Ventilatoren 74, 76 vorgesehen sein, die jeweils nur bei geöffneten Verschlußorganen in Betrieb gesetzt werden, um die Absaugung zu unterstützen. Je nach Bauart der Spülmaschine 14 und insbesondere bei längeren Ausführungen mit einer größeren Anzahl von Kammern kann es abweichend vom Dargestellten im übrigen auch zweckmäßig sein, das Dampf-Warmluft-Gemisch unmittelbar aus den Kammern abzusaugen.

Die vom Hauptkondensator 54 zu erwärmende Reinigungsflotte 38 wird mit einer Temperatur von 58°C dem Behälter 36 der zweiten Spülkammer 18 entnommen und mittels einer Pumpe 78 über eine Leitung 80 zum Eingang der Sekundärseite des Hauptkondensators 54 und durch diesen hindurch gefördert, wobei die Temperatur beispielsweise auf 60°C angehoben wird. Diese Temperatur am Ausgang der Sekundärseite wird mittels eines Thermostaten 82 erfaßt. Mittels einer Leitung 84 erfolgt die Rückleitung zum Behälter 34 der ersten Spülkammer 16.

In der dem Behälter 34 der ersten Spülkammer 16 und dem Behälter 36 der zweiten Spülkammer 18 gemeinsamen Wandung befindet sich eine Öffnung 86, die eine Strömung der Reinigungsflotte 38 zwischen beiden Kammern 16, 18 zuläßt. Die Öffnung 86 ist größer als bei bekannten Lösungen und hat eine Querschnittsfläche von beispielsweise einigen Prozent der Fläche der sie enthaltenden Wandung. Auch hierdurch wird der Temperaturunterschied der Reinigungsflotte 38 zwischen erster Spülkammer 16 und zweiter Spülkammer 18 gering gehalten, und Schwankungen der Zulauftemperatur der im Verflüssiger 52 erwärmten Reinigungsflotte 38 werden besser ausgeglichen.

Zur Regeneration der Reinigungsflotte 38 während des Betriebs wird der zweiten Spülkammer 18 über ein Ventil 89 Frischwasser zugeführt, und Reinigungsmittel und Desinfektionsmittel werden zur Aufrechterhaltung der jeweils erforderlichen Konzentration zudosiert, während zur Aufrechterhaltung eines vorgegebenen Flüssigkeitsspiegels der Reinigungsflotte 38 von dieser eine entsprechende Menge über einen nicht dargestellten Ablaß abgeführt wird. Der Ablaß befindet sich zweckmäßig im Boden 28 der ersten Spülkammer 16.

Die Wärmepumpe 10 ist so ausgelegt, daß sie die angegebenen Temperaturen der Reinigungsflotte 38 insbesondere in der ersten Spülkammer 16 bei voller Spülleistung der Spülmaschine 14 aufrechtzuerhalten vermag. Es gibt jedoch auch Betriebsfälle, in denen zwar die Spülmaschine 14 auf Spülbetrieb geschaltet ist, in denen aber Spülgut nur unregelmäßig oder garnicht angeliefert wird, wie dies beispielsweise in großen Kantinen oder Mensen der Fall sein kann. In diesem Fall ist es notwendig, die von der Wärmepumpe 10 abgegebene Wärmeleistung zu reduzieren, um eine übermäßige Erwärmung der Reinigungsflotte 38 und übermäßige Drücke am primärseitigen Eingang des Verflüssigers 52 zu vermeiden. Hierzu ist vorgesehen, daß in Abhängigkeit vom Überschreiten eines vorgegebenen Schwellenwertes der vom Thermostaten 82 erfaßten Temperatur der erwärmten Reinigungsflotte 38 anstelle des Expansionsventils 60 eine Drossel 88 in den Arbeitsmittelkreislauf einschaltbar ist, die in Reihe mit einem Absperrventil 90 parallel zum Absperrventil 58 und dem Expansionsventil 60 liegt. Hierzu wird das Absperrventil 58 geschlossen, während gleichzeitig das Absperrventil 90 geöffnet wird. Der Durchtrittsquerschnitt der Drossel 88 ist mehrfach geringer als derjenige des Expansionsventils 60, so daß sich stromab der Drossel 88 eine geringere Temperatur des Arbeitsmittels einstellt, als dies bei Wirksamkeit des Expansionsventils 60 der Fall ist. Andererseits ist die von der Drossel 88 durchgelassene Menge des Arbeitsmittels wesentlich geringer als die vom Expansionsventil 60 durchgelassene Menge, so daß die im Verdampfer 62 umgesetzte Wärmemenge stark reduziert ist. Hierdurch ergibt sich auch ein verringerter Druck am primärseitigen Eingang des Verflüssigers 52 und eine geringere von diesem abgegebene Wärmeleistung.

Reicht die durch die Einschaltung der Drossel 88 erzielte Leistungsverminderung nicht zu dem gewünschten Zweck aus, so muß eine weitere Maßnahme zu noch stärkerer Leistungsverminderung getroffen werden. Im einfachsten Fall wird hierzu bei einem weiteren Schwellenwert der vom Thermostaten 82 erfaßten Temperatur, der höher liegt als derjenige Schwellenwert, bei dem die Einschaltung der Drossel 88 erfolgte, der Kompressor 50 abgeschaltet. Eine weitere, im allgemeinen noch günstigere und gewünschtenfalls zusätzlich, nämlich noch vor der Abschaltung des Kompressors 50 durchführbare Maßnahme besteht darin, daß beim Überschreiten eines weiteren, gegenüber dem zur Umschaltung auf die Drossel 80 führenden Schwellenwert höheren Schwellenwert durch Öffnen des Ventils 89 kaltes Frischwasser der zweiten Spülkammer 18 zugeführt wird. Obwohl eine Zuführung von kaltem Wasser unmittelbar in die Leitung 80 selbstverständlich die stärkste Reduzierung des Drucks am primärseitigen Eingang des Verflüssigers 52 erbrächte, ist es wie beim dargestellten Ausführungsbeispiel vorteilhaft, wenn die Einführungsstelle des kalten Wassers von der Entnahmestelle der Reinigungsflotte 38 in der zweiten Spülkammer 18 eine gewisse Entfernung hat, so daß eine Vermischung mit der Reinigungsflotte 38 im Behälter 36 vor der Zuführung zum Verflüssiger 52 stattfindet, da hierdurch starke Regelschwankungen vermieden werden.

Obwohl Frischwasser im allgemeinen als zu kostspielig angesehen wird, um es allein zu Zwecken der Temperaturregelung einzusetzen, ist die Zuführung von Frischwasser im vorstehend erläuterten Fall durchaus ökonomisch. Zunächst kommt bei zweckmäßiger Bemessung der Drossel 88 und der Temperaturdifferenz, um die der zweite Schwellenwert (Öffnung des Ventils 89) über dem ersten Schwellenwert (Wirksammachen der Drossel 88) liegt, ein Regeleingriff durch Öffen des Ventils 89 relativ selten vor. Der Durchtrittsquerschnitt der Drossel 88 sollte mehrfach geringer sein als derjenige des Entspannungsventils 60, so daß durch die Einschaltung der Drossel 88 anstelle des Entspannungsventils 60 eine Leistungsverminderung um mindestens 30% und erforderlichenfalls bis zu über 50% erfolgt. Die Temperaturdifferenz zwischen dem ersten Schwellenwert und dem zweiten Schwellenwert liegt in der Praxis zweckmäßig bei 3°. Dann läßt sich ein Anteil der Regeleingriffszeit durch Öffnen des Ventils 89 an der Gesamtbetriebsdauer von einigen wenigen Prozent erreichen. Weiter sind auch zu einem wirksamen Regeleingriff keine grossen Wassermengen erforderlich. Bei einem Volumen der Behälter 34, 36 von jeweils 250 l genügt eine Zufuhr von 30 bis 40 l/h und maximal 50 l/h zu einer wirksamen Absenkung sowohl der Temperatur der Reinigungsflotte 38 als auch des Drucks am primärseitigen Eingang des Verflüssigers 52.

Als Sicherheitseinrichtung sind in Fig. 1 am primärseitigen Eingang des Verflüssigers 52 ein die Temperatur des Arbeitsmittels erfassender Thermostat 92 und ein dessen Druck erfassender Druckgeber 94 vorgesehn. Diese sprechen erst bei so hohen Werten der jeweiligen Größe an, daß diese bei einwandfreier Funktion des vorstehend beschriebenen Regeleingriffs nicht erreicht werden.

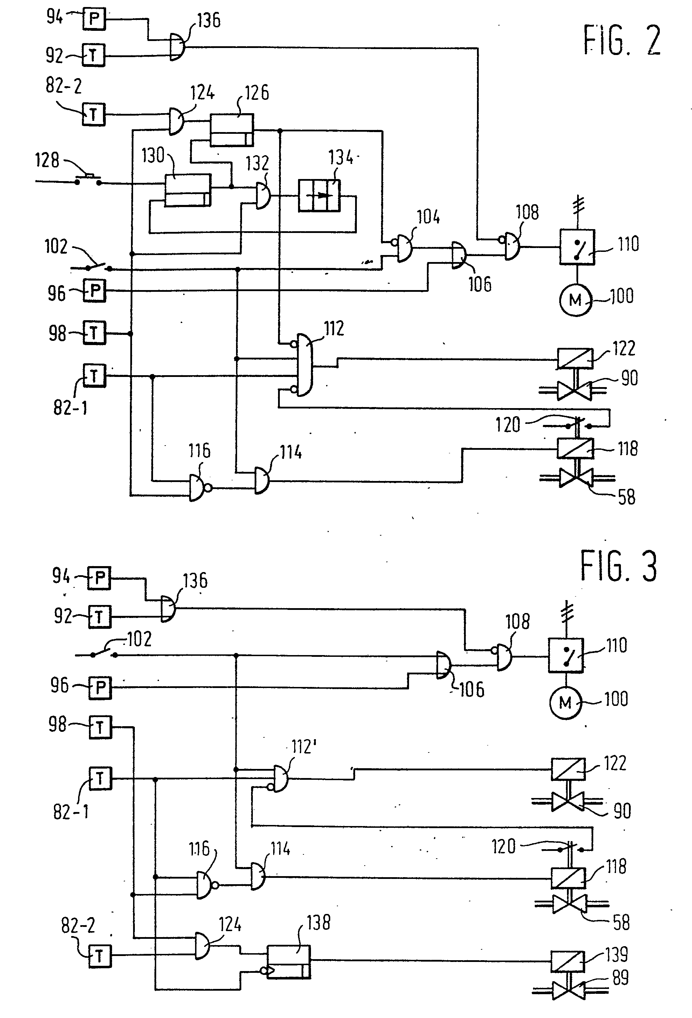

Fig. 2 zeigt als Logik-Schaltbild diejenigen Teile der elektrischen Schaltung der Wärmepumpe 10 in Fig. 1, die zur Auslösung der Schaltvorgänge bei den beiden Schwellenwerten der Temperatur der erwärmten Reinigungsflotte 38 beteiligt sind. Während jedoch in Fig. 1 entsprechend der tatsächlichen Ausführungsform zur Erzeugung entsprechender Signale ein einziger Thermostat 82 vorgesehen ist, der beispielsweise zwei Sätze von jeweils bei einem der beiden Schwellenwerte betätigbarer Kontakte aufweist, sind in Fig. 2 der Übersichtlichkeit halber zwei Thermostaten 82—1, 82—2 gezeigt, von denen ein erster Thermostat 82—1 beim Überschreiten eines ersten Schwellwertes und ein zweiter Thermostat 82—2 beim Überschreiten eines weiteren, gegenüber dem ersten Schwellenwert höheren Schwellenwertes ein Ausgangssignal abgibt. Weiter ist in Fig. 1 und 2 ein Druckgeber 96 dargestellt, der unmittelbar an der Saugseite des Kompressors 50 sitzt und der die Aufgabe hat, ein Stillsetzen des Kompressors 50 im Rahmen von Regelmaßnahmen jeweils solange zu vermeiden, bis der Druck in der Saugleitung einen vorgegebenen, niedrigen Schwellenwert unterschritten hat, um das Kondensieren von Arbeitsmittel im Kurbelgehäuse des Kompressors 50 und dadurch hervorgerufene "Flüssigkeitsschläge" sowie das schädliche Ölaufschäumen beim Anlauf des Kompressors zu verhindern.

Bei der erstmaligen Inbetriebnahme der Spülmaschine 14 nach längerem Stillstand ist es erforderlich, zunächst die Reinigungsflotte 38 in den Behältern 34, 36 zu erwärmen, ohne daß Spülgut gespült werden kann. Während dieser Aufheizzeit kann eine gegenüber demjenigen ersten Schwellenwert, bei dem sonst die Umschaltung auf die Drossel 88 erfolgt, höhere Temperatur der erwärmten Reinigungsflotte 38 zugelassen werden, da dann die Eintrittstemperatur der zu erwärmenden Reinigungsflotte 38 in den Verflüssiger 52 niedriger als bei Spülbetrieb liegt, so daß keine überhöhten primärseitigen Eingangsdrücke zu erwarten sind. Während des Aufheizens wird man daher ein Signal erzeugen, das den Thermostaten 82 bzw. die Thermostaten 82—1, 82—2 unwirksam macht, beispielsweise überbrückt. Im Ausführungsbeispiel gemäß Fig. 1 und 2 wird der Aufheizzustand durch die Abwesenheit des Signals eines Thermostaten 98 dargestellt, der am sekundärseitigen Eingang des Hauptkondensators 54 sitzt und der bei Temperaturen oberhalb der gewünschten Temperatur der Reinigungsflotte 38 im Behälter 36 der zweiten Spülkammer 18 (58°C) ein Signal abgibt.

In Fig. 2 wird das Signal zur Inbetriebnahme des Motors 100 des Kompressors 50 (Fig. 1) durch einen bei Inbetriebnahme der Wärmepumpe 10 und der Spülmaschine 14 (Fig. 1) geschlossenen Schalter 102 gegeben. Dieses Signal wird einem Eingang eines UND-Glieds 104 zugeführt, dessen anderer, invertierender Eingang zunächst nich von einem Signal beaufschlagt ist, so daß es das Signal vom Schalter 102 durchläßt. Dieses Signal wird über ein ODER-Glied 106 einem Eingang eines weiteren UND-Glieds 108 zugeführt, dessen weiterer invertierender Eingang wiederum zunächst nicht von einem Signal beaufschlagt ist, so daß an seinem Ausgang ein Signal erscheint, das den Schalter 110 des Motors 100 des Kompressors 50 schließt und diesen in Gang setzt.

Das vom Schalter 102 erzeugte Signal ist weiter Eingängen von UND-Gliedern 112, 114 zugeführt, von denen das UND-Glied 112 zunächst kein Ausgangssignal erzeugen kann, weil der erste Schwellenwert der Temperatur der erwärmten Reinigungsflotte 38 (Fig. 1) noch nicht erreicht ist und daher der Thermostat 82—1 noch kein Signal abgibt. Dagegen kann das UND-Glied 114 ein Signal abgeben, da seinem weiteren Eingang vom Ausgang eines NAND-Glieds 116 ein Signal zugeführt ist. Die Eingänge des NAND-Glieds sind vom Thermostaten 82—1 und vom Thermostaten 98 beaufschlagt, und sofern die Aufheizzeit beendet ist und der Thermostat 98 ein Ausgangssignal erzeugt, fehlt doch ein Ausgangssignal vom Thermostaten 82—1 zur Erfüllung der UND-Bedingung, so daß die NAND-Bedingung erfüllt ist. Das UND-Glied 114 erzeugt daher ein die Speisung der Magnetspule 118 bewirkendes Ausgangssignal, so daß die Magnetspule 118 das Absperrventil 58 öffnet. Hierdurch wird gleichzeitig ein Schalter 120 geschlossen, der durch Beaufschlagung eines invertierenden Eingangs des UND-Glieds 112 eine Speisung desjenigen Magneten 122 verhindert, der das Absperrventil 90 betätigt.

Wird nun beim ersten Schwellenwert der Temperatur der erwärmten Reinigungsflotte 38 der Thermostat 82—1 bzw. ein erster Satz von Kontakten des Thermostaten 82 (Fig. 1) betätigt, so erzeugt dieser ein entsprechendes Ausgangssignal, wodurch einerseits die NAND-Bedingung des NAND-Glieds 116 nicht mehr erfüllt ist, dessen Ausgangssignal wegfällt und auch das Ausgangssignal des UND-Glieds 114 wegfällt, so daß das Ventil 58 geschlossen und der Schalter 120 geöffnet werden, während andererseits der mit dem Thermostaten 82—1 verbundene Eingang des UND-Glieds 112 mit einem Eingangssignal beaufschlagt wird, so daß alle Eingänge dieses UND-Glieds den zur Abgabe eines Signals durch letzteres erforderlichen Zustand haben. Hierdurch wird die Spule 122 gespeist und anstelle des Absperrventils 58 des Expansionsventils 60 (Fig. 1) das Absperrventil 90 der Drossel 88 geöffnet.

Steigt trotz der vorstehend beschriebenen Umschaltung die Temperatur der erwärmten Reinigungsflotte 38 in unzulässiger Weise weiter an, so erzeugt bei einem gegenüber dem ersten Schwellenwert höheren Schwellenwert der Thermostat 82—2 ein Ausgangssignal. Dieses wird einem UND-Glied 124 zugeführt, das ein Ausgangssignal abgibt, sofern nicht an seinem weiteren Eingang noch kein Ausgangssignal von Thermostaten 98 vorliegt, weil die Anheizzeit noch nicht beendet ist. Das nunmehr vom UND-Glied 124 erzeugte Ausgangssignal wird mittels eines Speichers 126 gespeichert und von dessen Ausgang den invertierenden Eingängen der UND-Glieder 104, 112 zugeführt, worauf deren Ausgangssignale wegfallen. Durch den Wegfall des Ausgangssignals des UND-Glieds 112 wird der Magnet 122 entregt und das Absperrventil 90 geschlossen, so daß der Arbeitsmittelkreislauf unterbrochen ist. Der Schalter 110 wird jedoch noch nicht geöffnet, sondern erst dann, wenn der Druckgeber 96 nach entsprechender Absaugung kein Ausgangssignal mehr erzeugt.

Trotz Abschaltung beim zweiten Schwellenwert mittels des Thermostaten 82—2 soll es möglich sein, die Wärmepumpe 10 (Fig. 1) durch Einschaltung von Hand wirksam zu machen, beispielsweise weil nach längerer Pause Spülgut in die Spülmaschine 14 eingegeben wurde. In diesem Fall wird eine Drucktaste 128 betätigt, die einen weiteren Speicher 130 setzt. Dessen Ausgangssignal löscht den Speicher 126 und steht an einem Eingang eines UND-Glieds 132 an, das nur ein Ausgangssignal erzeugen kann, wenn auch der Thermostat 98 nach erfolgtem Aufheizen ein Signal abgibt. Das Ausgangssignal des UND-Glieds 132 wird einem Zeitglied 134 zugeführt, das nach Ablauf einer vorgegebenen Verzögerungszeit einen Ausgangsimpuls erzeugt. Die Verzögerungszeit entspricht der Laufzeit des Spülguts von der Eingabestation 22 zur Entnahmestation 24. Ist nach Ablauf der Verzögerungszeit die vom Thermostaten 82—2 gemessene Temperatur weiterhin zu hoch, so wird vom Ausgangssignal des Zeitglieds 134 der Speicher 130 gelöscht und vom Ausgangssignal des Thermostaten 82—2 wieder der Speicher gesetzt und der Schalter 110 erneut geöffnet.

Sicherheitseinrichtungen, beispielsweise der Thermostat 92 und der Druckgeber 94, können vorgesehen sein, um eine Abschaltung des Motors 100 des Kompressors 50 (Fig. 1) zu bewirken. Die Ausgangssignale des Thermostaten 92 und des Druckgebers 94 wirken über ein ODER-Glied 136 unmittelbar auf den invertierenden Eingang des UND-Glieds 108 und bewirken das Öffnen des Schalters 110, selbst wenn der Druckgeber 96 noch signalisieren sollte, daß der Druck des Arbeitsmittels in der Ansaugleitung des Kompressors 50 nicht auf den gewünschten Wert abgefallen ist.

Bei der Abwandlung der Schaltung gemäß Fig. 3 beaufschlagt das vom Ausgang des UND-Glieds 124 nach Beendigung des Aufheizvorganges beim Überschreiten des zweiten Schwellenwertes erzeugbare Ausgangssignal einen Speicher 138, dessen hierdurch erscheinendes Ausgangssignal die Speisung der Magnetspule 139 des Ventils 89 bewirkt, das dem Behälter 36 der zweiten Spülkammer 18 (Fig. 1) Frischwasser zuführt. Dies erfolgt solange, bis die Temperatur der erwärmten Reinigungsflotte unter den ersten Schwellenwert abgesunken ist, unterhalb von dem auch die Rückschaltung von der Drossel 88 auf das Expansionsventil 60 (Fig. 1) erfolgt. In diesem Fall wird nämlich durch das Verschwinden des Ausgangssignals des Thermostaten 82—1 der Speicher 138 an seinem invertierenden Löscheingang gelöscht. — Das UND-Glied 112′ in Fig. 3 hat, da hier der Speicher 126 (Fig. 2) weggefallen ist, keinen von letzterem beaufschlagten invertierenden Eingang, während seine Funktion im übrigen derjenigen des UND-Glieds 112 in Fig. 2 entspricht.

Gewünschtenfalls können auch die beschriebenen Regeleingriffe — Öffnung des Ventils 89 und Abschalten des Kompressors 50 —,

die nach dem Umschalten auf die Drossel 88 erfolgen, und demgemäß die Schaltungen gemäß Fig. 2 und 3 kombiniert werden. In diesem Fall wird man das Öffnen des Ventils 89 bei einem zweiten, gegenüber dem zum Umschalten auf die Drossel 88 führenden Schwellenwert höheren Schwellenwert und das Abschalten des Kompressors 50 bei einem dritten, gegenüber dem zweiten Schwellenwert höheren Schwellenwert vornehmen.

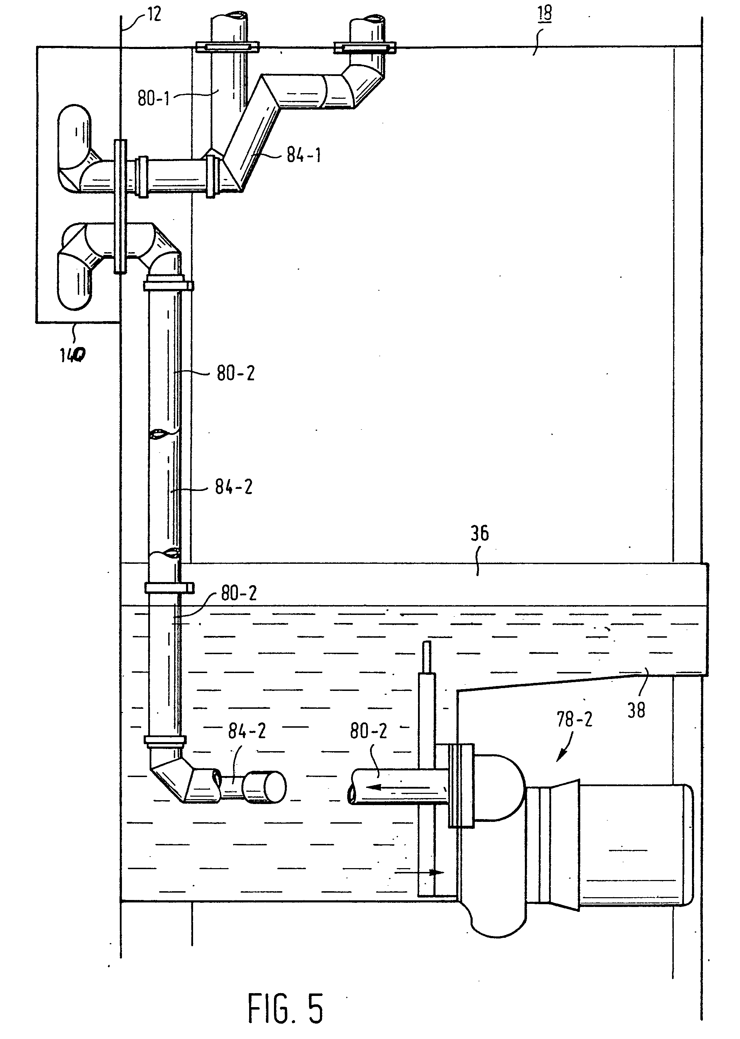

In Fig. 4 ist eine Spülmaschine 14 gezeigt, die gegenüber Fig. 1 eine zusätzliche Kammer, nämlich eine Vorspülkammer 140, aufweist. In dieser wird grober Schmutz vom Spülgut entfernt. Das entsprechende Düsensystem ebenso wie diejenigen in den Spülkammern 17, 18 und die Düsen 40 (Fig. 1) sind einfachheitshalber nicht dargestellt. Die Spülleistung der Spülmaschine 14 ist so groß, daß die entwickelte Abwärme ausreicht, zwei Wärmepumpen 10—1, 10—2 zu speisen; mit Fig. 1 wirkungsmäßig übereinstimmende, doppelt vorhandene Teile sind durch einen Bindestrich und eine angehängte Zusatzziffer unterschieden.

Bei der Spülmaschine 14 gemäß Fig. 4 kann zugelassen werden, daß die Temperatur der Reinigungsflotte 38 im Behälter 142 der Vorspülkammer 140 geringer ist als in der ersten Spülkammer 16, und dort wiederum ist die Temperatur etwas geringer als in der zweiten Spülkammer 18. Das heiße, in der Nachspülkammer 20 ausgesprühte Nachspülwasser fließt in den Behälter 36 der zweiten Spülkammer 18, die ihrerseits über die gemeinsame Wandung mit dem Behälter 34 der ersten Spülkammer 16 hinweg Reinigungsflotte in letzteren abgibt, und vom Behälter 34 fließt die Reinigungsflotte in dem Maß, wie solche von dem Behälter 36 her nachfließt, wiederum in den Behälter 142 der Vorspülkammer 140. Dort erfolgt über einen nicht gezeigten Überlauf die Abführung. Insgesamt ergeben sich so von Kammer zu Kammer, nämlich von der Vorspülkammer 140 zur ersten Spülkammer 16 und von der ersten Spülkammer 16 zur zweiten Spülkammer 18, jeweils ansteigende Temperaturen der Reinigungsflotte 38. Aufgrund dieses Sachverhalts und wegen der hohen Temperatur des in der Nachspülkammer 20 verwendeten, reinen Wassers, steht am Ausgang der Nachspülkammer 20 und damit oberhalb der Entnahmestation 24 eine größere Abwärme zur Verfügung als durch das aus dem Eingang der Vorspülkammer 14 austretende und oberhalb der Aufgabestation 22 abgesaugte Dampf-Warmluft-Gemisch. Andererseits muß jedoch die Vorspülkammer 140 eine gegenüber der zweiten Spülkammer 18 höhere Wärmeleistung zugeführt erhalten, um ein nicht allzu großes Temperaturgefälle zwischen den Kammern 140, 16, 18 entstehen zu lassen. Zu diesem Zweck liegen die Wärmepumpen 10—1, 10—2 gewissermaßen zu einer zur Förderrichtung senkrechten, vertikalen, mittig zwischen Eingabestation 22 und Entnahmestation 24 liegenden Ebene spiegelbildlich vertauscht; die eine Wärmepumpe 10—1 liegt nahe der Entnahmestation 24 und nimmt mit ihrem Verdampfer 62 (Fig. 1) das dort austretende Dampf-Warmluft-Gemisch über die Öffnung 70 auf und ist über Leitungen 80—1, 84—1 mit dem Behälter 142 verbunden, wo die Förderung mittels der Pumpe 78—1 erfolgt, während andererseits die Wärmepumpe 10—2 nahe der Eingabestation 22 angeordnet ist und das dort austretende Dampf-Warmluft-Gemisch entwärmt, wobei mittels einer Pumpe 78—2 über eine Leitung 80—2 die Reinigungsflotte 38 vom Behälter 36 der zweiten Spülkammer 18 zur zweiten Wärmepumpe 10—2 gefördert wird und durch eine Leitung 84—2 zum Behälter 36 zurückströmt. Hierdurch wird ein wesentlich besserer Gesamtwirkungsgrad erhalten, als wenn die Wärmepumpen 10—1, 10—2 jeweils oberhalb derjenigen Kammern angeordnet wären, aus denen die ihnen zugeführte Reinigungsflotte entnommen und/oder denen die Reinigungsflotte zugeführt wäre.

Aus Fig. 5 ist zunächst der Querschnitt des Behälters 36 der zweiten Spülkammer 18 erkennbar, diejenigen der ersten Spülkammer 16 und der Vorspülkammer 140 sind gleich ausgebildet. Der Querschnitt ist L-förmig mit einem nach unten gerichteten Schenkel, dessen horizontale Breite annähernd die Hälfte der Breite der Kammer 18 einnimmt. Unterhalb des waagerechten Schenkels liegt die als elektromotorisch angetriebene Kreiselpumpe ausgebildete Pumpe 78—2, die an eine senkrechte Wand des nach unten ragenden Querschnittschenkels des Behälters 36 angesetzt ist, so daß sie Reinigungsflotte 38 in horizontaler Richtung ansaugt und in dazu paralleler Richtung durch die Leitung 80—2 abfördert. Beide Leitungen 80—2, 84—2 verlaufen innerhalb der Kammer 18 senkrecht nach oben und sind in ihren senkrechten Abschnitten von Schläuchen gebildet, sind dann nahe der Oberseite der Kammer 18 als Rohre horizontal nach außen geführt, sind dann in horizontaler Richtung gemeinsam mit den Leitungen 80—1 84—1 in einem an der oberen Außenseite der Kammern 140, 16 18 (Fig. 4) gebildeten Kanal von rechteckigem Querschnitt verlegt, verlaufen schließlich, wie anhand der Leitungen 80—1, 84—1 in Fig. 5 erkennbar, nahe dem zugeordneten Verflüssiger 52 (Fig. 1) in horizontaler Richtung ins Innere einer unterhalb des Verflüssigers liegenden Kammer — im Falle der Leitungen 80—1, 84—1 ins Innere der Kammer 18 —, von wo sie durch deren Oberseite hindurch vertikal nach oben zu dem zugeordneten Verflüssiger geführt sind. Die horizontale, in der Zeichenebene der Fig. 5 gemessene Breite des von einem Verkleidungsblech gebildeten Kanals soll, um Überkreuzungen zwischen den Leitungen zulassen zu können, mindestens das Doppelte der Leitungsdurchmesser betragen, während die Höhe des Kanals mehr als das Vierfache dieses Durchmessers betragen sollte, da in ihm streckenweise die vier Leitungen 80—1, 80—2, 84—1, 84—2 parallel nebeneinander verlaufen.

Der Regeleingriff zur Verhinderung von Überhitzungen bei Teillast kann bei den Wärmepumpen 10—1, 10—2 in Fig. 4 in der Weise erfolgen, wie dies bereits anhand von Fig. 1 bis 3 erläutert wurde. So kann beispielsweise wieder mittels eines Ventils 89—2 der zweiten Spülkammer 18 kaltes Frischwasser zugeführt werden, um übermäßige Drücke im Verflüssiger 52 (Fig. 1) der Wärmepumpe 10—2 zu vermeiden, während in entsprechender Weise ein Ventil 89—1 der Wärmepumpe 10—1 zugeordnet ist.

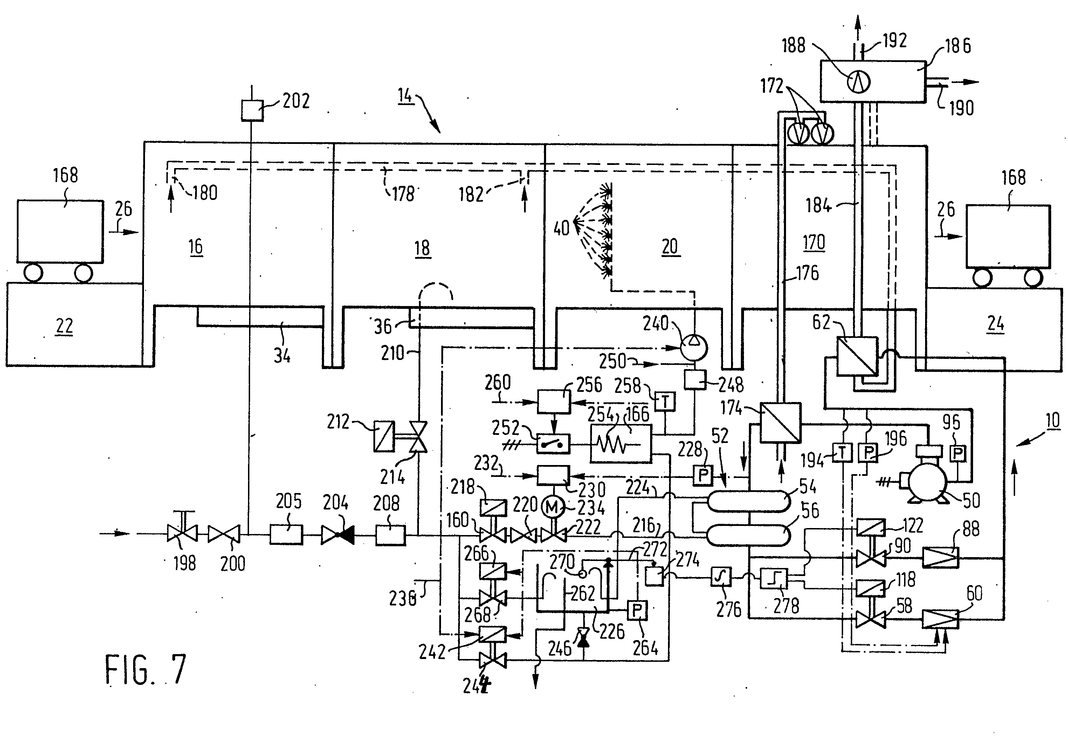

In Fig. 6 ist eine weitere Spülmaschine 14 dargestellt, die sich von denjenigen nach Fig. 1 und 4 dadurch unterscheidet, daß zwischen einer Vorspülkammer 140, einer Spülkammer 18 und einer Rückfettungskammer 144, die jeweils einen Behälter 142, 36, 146 für die Reinigungsflotte 38 bzw. für eine Rückfettungsemulsion 148 aufweisen, Zonen liegen, in denen keine derartige Behälter vorgesehen sind. Es sind dies eine Abtropfzone 150, in der in der Vorspülkammer 140 auf das Spülgut aufgesprühte Reinigungsflotte 38 vom Spülgut abtropfen kann und in die Kammer 140 zurückfließt, sowie die Nachspülkammer 20, wo durch das Nachspülen mit reinem, heißem Wasser Reste der Reinigungsflotte 38 aus der Spülkammer 18 abgespült werden und in die Spülkammer 18 zurückfließen. Zusätzlich kann in der Nachspülkammer 20 in Förderrichtung des Spülguts hinter den Düsen 40 ein Abtropfen oder auch mittels Warmluftgebläsen ein teilweises Abtrocknen erfolgen. In der Rückfettungskammer 144 wird durch die aufgesprühte Emulsion 148, die der bei der spanabhebenden Werkstoffbearbeitung üblichen "Bohrmilch" in ihrer Zusammensetzung gleicht oder ähnelt und die auch als "Instrumentenmilch" bezeichnet wird, dem Spülgut ein Oberflächenfilm weidergeben, der für das reibungsarme Funktionieren von Gelenkstellen zweckmässig ist. Dies ist beispielsweise bei chirurgischen Instrumenten der Fall, wie auch das Vorhandensein der Zone 150 und der Nachspülkammer 60 im Ausführungsbeispiel in Fällen wie beim Spülen von Operationsinstrumenten zur Anwendung kommen, wo es auf besonders sichere Vermeidung einer Keimübertragung zwischen den einzelnen Kammern 140, 18, 144 ankommt und diese deshalb nicht in Flüssigkeitsverbindung stehen dürfen.

Bei der Spülmaschine 14 gemäß Fig. 6 ist eine einzige Wärmepumpe 10 vorgesehen. Die deren Verflüssiger 52 (Fig. 1), und zwar im Ausführungsbeispiel nur dem Hauptkondensator 54, über die Pumpe 78 und die Leitung 80 zuführbare Reinigungsflotte 38 wird demjenigen Behälter 36 entnommen, der von allen Behältern 142, 36, 146 die höchste Temperatur aufweist, und wird nach Erwärmung wieder in denselben Behälter zurückgeführt. Um auch die Reinigungsflotte 38 im Behälter 142 bzw. die Emulsion 148 im Behälter 146 zu erwärmen, sind in diesen übrigen Behältern 142, 146 Kühlschlangen 152, 154 horizontal verlegt, die in Fig. 6 nur der Deutlichkeit halber senkrecht stehend und vereinfacht dargestellt sind, und diese Kühlschlangen 152, 154 sind in die Leitung 84 vom Hauptkondensator 54 (Fig. 1) der Wärmepumpe 10 zum Behälter 36 der Spülkammer 18 eingeschaltet. Im Ausführungsbeispiel betragen die Temperaturen im Behälter 142 der Vorspülkammer 140 und im Behälter 146 der Rückfettungskammer 144 jeweils 45°C und liegen damit merklich niedriger als die Temperatur der Spülkammer 20, die bei 60°C liegt, jedoch hat die Vorspülkammer 140 wegen des Einlaufs von auf Umgebungstemperatur befindlichem Spülgut einen gegenüber der Rückfettungskammer 144 erhöhten Wärmebedarf, weshalb die erwärmte Reinigungsflotte 38, von der Wärmepumpe 10 aus gesehen, zunächst zur Rohrschlange 152 im Behälter 36 der Vorspülkammer 140 und danach erst zur Rohrschlange 154 im Behälter 156 der Rückfettungskammer 144 fließen soll, um eine möglichst günstige Ausnutzung der hierdurch zuführbaren Wärme zu erreichen. Einlaß der Leitung 80 und Auslaß der leitung 84 liegen in der Spülkammer 18, in der der höchste Wärmebedarf vorleigt.

In Fig. 6 ist der nicht dargestellte Verflüssiger wie in Fig. 1 als aus einem Hauptkondensator 54 und einem Hilfskondensator 56 bestehend zu denken, wobei die Leitungen 80, 84 and den Hauptkondensator 54 angeschlossen sind, während der Hilfskondensator 56 dazu dient, ihm über das Ventil 57 und eine Leitung 162 zugeführtes, aus dem Wasserleitungsnetz entnommenes Kaltwasser vorzuwärmen, das danach über die Leitung 59 und den Durchlauferhitzer 61 den Düsen 40 der Nachspülkammer zugeführt wird.

Die Regelung der Wärmepumpe 10 in Fig. 6 derart, daß am Verflüssiger 52 (Fig. 1) am Eingang der Primärseite keine unzulässig hohen Drücke und Temperaturen auftreten, kann wieder in der anhand von Fig. 1 und 3 beschriebenen Weise erfolgen. Alternativ kann hierzu auch eine Mengenregelung des über die Leitung 162 zugeführten Kaltwassers und eine Zwischenspeicherung des über die Leitung 164 abgeführten Warmwassers vor der Verwendung zum Nachspülen erfolgen, wie dies im folgenden noch anhand von Fig. 7 näher erläutert werden wird.

Bei großer Länge der Leitung 84 und großer Anzahl der in diese eingeschalteten Kühlschlangen 152, 154 kann es abweichend von Fig. 6 auch zweckmäßig sein, anstelle der Pumpe 78 eine in die Leitung 84 eingeschaltete Pumpe vorzusehen, um die Sekundärseite des Hauptkondensators 54 (Fig. 1) nicht mit allzu hohen Drücken belasten zu müssen. Weiter kann in jedem Fall die durch den Hauptkondensator 52 hindurchgeführte Strömung der Reinigungsflotte 38 hinsichtlich ihrer Menge je Zeiteinheit in Abhängigkeit vom erforderlichen Wärmebedarf der Spülmaschine 14, insbesondere von der Temperatur im Behälter 36, im Sinne eines Konstanthaltens dieser Temperatur geregelt werden. Bei geringer Strömung durch den Hauptkondensator 54 wird dann erforderlichenfalls durch Wirksammachen der Drossel 88 (Fig. 1), durch Regelung der dem Hilfskondensator 56 zugeführten Kaltwassermenge und notfalls durch Abschaltung des Kompressors 50 dafür gesorgt, daß der primärseitige Eingangsdruck des Verflüssigers 52 (Fig. 1) nicht auf unzulässige Werte ansteigt.

In Fig. 7 ist eine Spülmaschine 14 dargestellt, wie sie zum Spülen und Desinfizieren größerer Gegenstände insbesondere in Krankenhäusern verwendet wird; im Ausführungsbeispiel sind als Spülgut Transportwagen 168 angedeutet, wie sie zum Transport von auf Tabletts in Geschirr getragenen Speisen zu Krankenzimmern und zum Rücktransport der Tabletts mit Schmutzgeschirr zu einer Geschirrspülmaschine (beispielsweise auch der in Fig. 1 oder 4 gezeigten Art) oder auch in Operationssälen zur Aufbewahrung und zum Tragen von chirurgischen Instrumenten und Hilfsgeräten verwendet werden. Zum Spülen und Desinfizieren weist die Spülmaschine 14 zwei Spülkammern 16, 18 auf, während ein Nachspülen mit reinem heißem Wasser mittels Düsen 40 in der Nachspülkammer 20 erfolgt, wo auch anschließend ein Vortrocknen durch Abtropfen erfolgt, und schließlich werden die Wagen in einer Trockenkammer 170 mittels Warmluft vollständig getrocknet, bevor die Wagen 168 zu einer Entnahmestation 24 gelangen, von der der Abtransport erfolgt.

Die Wagen 168 werden beim Betrieb der Spülmaschine 14 taktweise von jeweils einer Kammer 16, 18, 20, 170 zur nächstfolgenden Kammer weitertransportiert; der hierzu vorgesehene Förderer ist nicht dargestellt. Durch den taktweisen Transport kann die Verweildauer der Wagen 168 in den einzelnen Kammern 16, 18, 20, 170 günstig gewählt werden; die in allen Kammern 16, 18, 20, 170 gleiche Verweildauer wird entsprechend der höchsten in einer einzelnen Kammer erforderlichen Verweildauer gewählt, wobei je nach Spülgutdurchsatz die Anzahl der Kammern auch abweichend vom dargestellten Ausführungsbeispiel kleiner oder größer sein kann. Entsprechend dem taktweisen Betrieb werden die Pumpen 46, 48 der Düsensysteme 42, 44 (Fig. 1) der Spülkammern 16, 18 jeweils nur dann eingeschaltet, wenn sich ein Wagen 168 nach einem Transportschritt an der in der Kammer 16, 18 vorgesehenen Stelle befindet. Diese Stelle und daher auch die Behälter 34, 36 liegen jeweils in einem Abstand hinter dem Eingang der Kammer 16, 18, da am Eingang der Kammern 16, 20, 170 sowie am Ausgang der Trockenkammer 170 nicht gezeigte, eingangsseitig ins Innere der Kammern schwingende Türen vorgesehen sind, die nur beim Durchtritt eines Wagens 168 während des Transportschrittes geöffnet werden. Auch die Zuführung der Warmluft zur Trockenkammer 170 mittels Gebläsen 172 erfolgt taktweise mit voller Leistung nur dann, wenn sich ein Wagen 168 zum Trocknen in der Trockenkammer 170 befindet, jedoch laufen während des Transportschrittes die Gebläse 172 zweckmäßig mit verringerter Förderleistung weiter, um bei geöffneten Türen am Eingang der Trockenkammer 170 durch dann in die Nachspülkammer 20 und ggf. in die Spülkammern 18, 16 strömende Warmluft zu verhindern, daß Wasserdampf in umgekehrter Richtung in die Trockenkammer strömt; sind abweichend vom dargestellten Ausführungsbeispiel zwei Trockenkammern vorgesehen, so wird man während des Transportschrittes wenigstens die Gebläse 172 der bezüglich der Förderrichtung ersten Trockenkammer zumindest mit Teilleistung laufen lassen.

Die Wärmekapazität der Wagen 168 und anderer großer Gegenstände wie beispielsweise Krankenhausbetten ist bei der diesem Spülgut angepaßten, großvolumigen Bauweise der Spülmaschine 14 relativ gering zur Wärmekapazität der Reinigungsflotte in den Behältern 34, 36 der Spülkammern 16, 18. Weiter geben die in diesem Fall relativ leistungsstark zu bemessenden Pumpen 46, 48 (Fig. 1) für die Reinigungsflotte an diese eine große thermische Verlustleistung ab. Dabei benötigen relativ sperrige Spülgüter wie die Wagen 168 eine große Menge von heißem Nachspülwasser, das in die zweite Spülkammer 18 fließt, von deren Behälter 36 die Reinigungsflotte wiederum zum Behälter 34 der ersten Spülkammer 16 überfließt. Aus diesen Gründen genügt eine relativ geringe Wärmeleistung zur Aufrechterhaltung der erforderlichen Temperatur der Reinigungsflotte in den Behältern 34, 36, zumal diese erforderliche Temperatur bei Verwendung geeingneter Reinigungsmittel einen im Vergleich zu Geschirrspülmaschinen geringeren Wert haben kann. Andererseits wird zur Erhitzung der Luft, die der Trockenkammer 170 als Warmluft zugeführt wird, eine relativ große Wärmeleistung benötigt. Daher ist es bei dem Ausführungsbeispiel gemäß Fig. 7 abweichend von den vorher beschriebenen Ausführungsbeispielen günstig, wenn die Wärmepumpe 10 zur Erzeugung dieser Warmluft, nicht jedoch zur Erwärmung der Reinigungsflotte in den Behältern 34, 36 verwendet wird. Abweichend von der kontinuierlich möglichen Erwärmung der Reinigungsflotte muß jedoch die Warmluft der Trockenkammer 170 entsprechend dem taktweisen Betrieb der Spülmaschine 14 jeweils nur während einer vorgegebenen Trocknungszeit zugeführt werden, nach der bis zur nächstfolgenden Trocknungszeit während des Transportschrittes grundsätzlich keine Warmlufterzeugung und beim Ausführungsbeispiel wegen des Weiterlaufens der Gebläse 172 mit ver-

ringerter Leistung eine nur geringe Wärmeleistung zur Warmlufterzeugung erforderlich ist.

Eine Wärmepumpe kann man nur unter Inkaufnahme von Nachteilen taktweise betreiben, und bei den bei Spülmaschinen der betrachteten Art in Frage kommenden Taktfolgezeiten ist ein taktweiser Betrieb der Wärmepumpe durch abwechselndes Einschalten und Ausschalten nicht möglich, u.a. wegen der nach einem Ausschaltbefehl vergehenden Totzeit bis zum Ansprechen des den Kompressor 50 abschaltenden Druckgebers 96. Auch die Wärmepumpe 10 beim Ausführungsbeispiel gemäß Fig. 7 wird daher kontinuierlich betrieben. Trotzdem wird sie verwendet, um über einen Wärmetauscher 174 wechselnde Wärmemengen zur Warmlufterzeugung abzugeben. Durch noch zu beschreibende Regelungsmaßnahmen wird die Wärmepumpe 10 für einen derartigen Betreib geeignet ausgebildet und insbesondere dafür gesorgt, daß der primärseitige Eingangsdruck des Verflüssigers 52 in den Zeiten verringerter Wärmeleistungsabgabe über den Wärmetauscher 174 nicht auf unzulässig hohe Werte ansteigt.

Die Wärmepumpe 10 ist beim Ausführungsbeispiel gemäß Fig. 7 unterhalb der Trockenkammer 170 und teilweise unterhalb der Spülkammer 20 oberhalb von deren Standfläche angeordnet; nur zur Verdeutlichung sind die Teile der Wärmepumpe 10 unmaßstäblich vergrößert in Fig. 7 unterhalb der Unterseite der Spülmaschine 14 dargestellt.

Der Aufbau des Arbeitsmittelkreislaufes der Wärmepumpe 10 entspricht demjenigen in Fig. 1, mit Ausnahme dessen, daß zwischen den Kompressor 50 und den Eingang der Verflüssigers 52 die Primärseite des bereits genannten Wärmetauschers 174 eingeschaltet ist, durch dessen Sekundärseite die der Umgebung der Spülmaschine 14 entnommene Raumluft strömt, erhitzt wird und hiernach über eine Leitung 176 und die Gebläse 172 der Trockenkammer 170 zugeführt wird. Beim Eintritt in die Sekundärseite des Wärmetauschers 174 hat die Raumluft beispielsweise eine Temperatur von 25°C und eine relative Feuchte von 60%, während sie nach ihrer Erhitzung eine Temperatur von etwa 55°C und eine relative Feuchte von 12% aufweist.

Das von der Wärmepumpe 10 zu entwärmende Dampf-Warmluft-Gemisch wird dem Verdampfer 62 über eine in ihrem Verlauf nur angedeutete Leitung 178 zugeführt, die tatsächlich von innerhalb der Spülmaschine 14 verlegten Kanälen genügend großen Querschnitts gebildet ist.

Es liegen Eintrittsöffnungen 180, 182 der Leitung 178 innerhalb der Spülkammern 16, 18 nahe deren Eintrittsseite bzw. Austrittsseite, letzteres deshalb, weil so beim Öffnen der Türen zwischen zweiter Spülkammer 18 und Nachspülkammer 20 aus der Nachspülkammer 20 in die Kammer 18 eintretende, von den Düsen 40 aufsteigende Dampfschwaden besonders günstig aufgefangen werden können. Nach dem Durchsetzen der Sekundärseite des Verdampfers 62 wird die dann erwärmte und entfeuchtete Luft über eine Leitung 184 nach oben geführt und entweder mittels eins Gebläses in den umgebenden Raum oder ins Freie ausgeblasen, oder besser noch kann die kontinuierlich anfallende Kaltluft wie beim Ausführungsbeispiel einer Klimaanlage 186 zugeführt werden. Diese umfaßt ein die Kaltluft ansaugendes und damit auch das Dampf-Warmluft-Gemisch zum Verdampfer 62 förderndes Gebläse 188. Die in gewünschter Weise klimatisierte Luft wird über eine Leitung 190 beispielsweise dem die Spülmaschine 14 umgebenden Raum zugeführt, während überschüssige Kaltluft durch eine Leitung 192 ins Freie abgeführt wird.

Bei der Wärmepumpe 10, in Fig. 7 dargestellt, jedoch auch bei denjenigen in Fig. 1, 4 und 6 vorhanden, sind ein Temperaturwandler 194 und ein Druckwandler 196 am Ausgang des Verflüssigers 62. Das Entspannungsventil 60 ist hinsichtlich seines Durchflußquerschnittes nich nur in üblicher Weise vom hydrostatischen Ausgangssignal des Temperaturwandlers 194 im Sinne eines Konstanthaltens der Temperatur am Ausgang des Verdampfers 62, sondern zusätzlich auch vom hydrostatischen Ausgangssignal des Druckwandlers 196 im Sinne eines Konstanthaltens des Druckes am Ausgang des Verdampfers 62 gesteuert, um beispielsweise bei schwankenden Umgebungstemperaturen die Abwärme im zu entwärmenden Dampf-Warmluft-Gemisch möglichst weitgehend auszunutzen.

Es seien nun die Regelmaßnahmen beschrieben, die bei geringer über den Wärmeaustauscher entnommener Wärmeleistung verhindern, daß der primärseitige Eingangsdruck des Verflüssigers 52 auf unzulässige Werte ansteigt. Hierzu wird im wesentlichen durch die Sekundärseite des Verflüssigers, nämlich durch die in Reihe geschalteten Sekundärseiten des Hilfskondensators 56 und des Hauptkondensators 54, aus dem Wasserleitungsnetz entnommenes Kaltwasser geleitet und bezüglich seiner Strömung, d.h. seiner den Verflüssiger 52 je Zeiteinheit durchfließenden Menge, im Sinne eines Konstanthaltens des primärseitigen Eingangsdrucks geregelt.

Kaltwasser wird aus dem Leitungsnetz über ein bei Betriebsbeginn zu öffnendes Ventil 198 und ein Druckreduzierventil 200 zugeführt. Hinter dem Druckreduzierventil 200 ist eine an der höchsten Stelle des Raumes liegende Vorrichtung 202 zum Verhindern eines Unterdrucks am Ausgang des Druckreduzierventils 200 angeschlossen, damit im Falle eines Druckabfalls im Leitungsnetz, beispielsweise bei dessen Entleeren, kein Wasser aus den nachfolgenden Anlageteilen zurückgesaugt werden kann. Dem selben Zweck dient ein Rückschlagventil 204, dem ein Schmutzfänger 205 vorgeschaltet ist und das Kaltwasser vom Druckreduzierventil 200 zu einer Entkalkungsvorrichtung 208 durchläßt. Hinter der Entkalkungsvorrichtung 208 führt eine Zweigleitung 210 zum Behälter 36 der zweiten Spülkammer 18, um diesen und den Behälter 34 der ersten Spülkammer 16 bei Bedarf zu füllen, in welchem Fall ein von einem Magneten 212 betätigbares, in die Leitung 210 eingeschaltetes Ventil 214 geöffnet wird. Weiter führt vom Ausgang der Entkalkungsvorrichtung 208 eine Leitung 216 über das von einem Magneten 218 betätigbare, im Betriebszustand völlig geöffnete Ventil 160, ein weiteres Druckreduzierventil 220 und ein Stellventil 222 zum sekundärseitigen Eingang des Hilfskondensators 56. Dieser ist, wie bereits erwähnt, mit dem Hauptkondensator 54 in Reihe geschaltet. Der sekundärseitige Ausgang des Hauptkondensators 54 ist über eine Leitung 224 mit einem Speicherbehälter 226 verbunden.

Zur Erfassung des primärseitigen Eingangsdrucks des Hauptkondensators 54 ist an dessen Eingang ein Druckwandler 228 vorgesehen, der ein dem gemessenen Druck proportionales Ausgangssignal erzeugt, das als Istwertsignal einem Regler 230 zugeführt wird. Dieser vergleicht das Istwertsignal mit einem über einen Signalkanal 232 zugeführten, einstellbaren Sollwertsignal und steuert entsprechend der erhaltenen Regelabweichung mittels eines Stellmotors 234 den Durchflußquerschnitt des Stellventils 222 derart, daß der primärseitige Eingangsdruck des Hauptkondensators 54 auch bei wechselnder über den Wärmeaustauscher 174 abgegebener Wärmeleistung konstant bleibt. Hierbei fließt also dem Speicherbehälter 226 je nach Regelzustand eine mehr oder minder große Menge je Zeiteinheit von im Verflüssiger 52 erwärmtem Wasser zu. Dessen Temperatur bleibt dabei als Folge der beschriebenen Druckregelung annähernd konstant und hat vorzugsweise zumindest annähernd denjenigen Wert von 90°C, den das über die Düsen 40 versprühte Nachspülwasser haben soll.

Der Speicherbehälter 226 dient als Zwischenspeicher für das kontinuierlich, jedoch in unterschiedlicher Menge vom Verflüssiger kommende, erwärmte Wasser, da dieses nur taktweise in jeweils vorgegebener Menge zum Nachspülen verwendet wird. Die Leistungsfähigkeit der Wärmepumpe 10 ist so ausgelegt, daß bei Vollast der Spülmaschine 14 (Eingabe eines Wagens 168 bei jedem Taktschritt) und bei einer mittleren Umgebungstemperatur (Lufttemperatur 25°C in dem die Spülmaschine 14 enthaltenden Raum) einerseits bei jedem Takt die erforderliche Warmluft für die Trockenkammer 170 erzeugt wird und andererseits die sich zwischen aufeinanderfolgenden Nachspülvorgängen im Speicherbehälter 226 ansammelnde Wassermenge genau der für einen Nachspülvorgang erforderlichen Wassermenge gleicht.

Während des Nachspülvorgangs wird über einen Signalkanal 236 ein entsprechendes Signal gegeben. Hierdurch wird eine Pumpe 240 in Gang gesetzt, die das im Speicherbehälter 226 enthaltene Heißwasser aus diesem ansaugt und zu den Düsen 40 fördert, und gleichzeitig wird die Speisung des Magneten 242 eines Ventils 244 vorbereitet, das zu diesem Zeitpunkt jedoch noch nicht öffnet. Das Heißwasser fließt aus einem Anschluß im Boden des Speicherbehälters 226 über ein Rückschlagventil 246, einen Durchlauferhitzer 166 und ein Filter 248 zur Pumpe 240. Über einen Anschluß 250 kann erforderlichenfalls ein Glanzspülmittel oder ein anderes Nachbehandlungsmittel zugegeben werden. Eine Beheizung des Durchlauferhitzers 166 durch hochwertige Fremdenergie ist bei zu Beginn des Nachspülvorgangs vollständiger Befüllung des Speicherbehälters 226 mit Heißwasser nicht oder allenfalls in geringem Umfang erforderlich, um sicherzustellen, daß das Nachspülwasser die erforderliche Temperatur von 90°C hat und zu seiner Desinfektion mindestens 3 min auf dieser Temperatur gehalten wurde, bevor es zum Einsatz kommt. Die Zufuhr von Fremdenergie zum Durchlauferhitzer 166 — im Ausführungsbeispiel von über einen Schalter 252 einem Heizwiderstand 254 zugeführte elektrische Energie, bei anderen Ausführungsformen Heißdampf — wird mittels eines Reglers 256 geregelt, dem ein dem Istwert der Temperatur des Heißwassers am Ausgang des Durchlauferhitzers 166 entsprechendes Istwertsignal von einem Temperaturwandler 258 zugeführt wird, während er ein entsprechendes Sollwertsignal über einen Kanal 260 erhält.

Das Innenvolumen des Speicherbehälters 226 ist um annähernd 10% größer als diejenige Heißwassermenge, die für einen Nachspülvorgang erforderlich ist. War bei Beginn des Nachspülvorgangs der Speicherbehälter 226 bis zu seiner maximalen Füllhöhe befüllt, so verbleibt nach dem Nachspülvorgang eine Restfüllung mit einer Füllhöhe, die einen Bruchteil der maximalen Füllhöhe ausmacht.

Sollte, beispielsweise bei erhöhter Raumlufttemperatur, zwischen aufeinanderfolgenden Nachspülvorgängen eine größere Wassermenge vom Verflüssiger 52 erwärmt werden, als für einen einzelnen Nachspülvorgang erforderlich ist, so daß dem Speicherbehälter 226 mehr erhitztes Wasser zugeführt wird, als zum Erreichen des maximalen Flüssigkeitsstandes erforderlich ist, dann wird das überschüssige Wasser über ein sich mit seinem Einlauf bis zur gewünschten maximalen Flüssigkeitshöhe erstreckendes Überlaufrohr 262 abgeführt. Da die Abführung von Heißwasser in dieser Weise nur relativ selten und kurzzeitig auftritt, kann im allgemeinen der hierdurch auftretende Energieverlust hingenommen werden, jedoch kann gewünschtenfalls auch dieses Heißwasser nochmals gespeichert und zu sonstigen Zwecken, beispielsweise zur Luftbefeuchtung in der Klimaanlage 186, verwendet werden.

Die Erhitzung der der Trockenkammer 170 zugeführten Luft mittels des Wärmetauschers 174 hat gewissermaßen Vorrang vor der Wassererwärmung mittels des Verflüssigers 52; bei geringen Temperaturen der dem Wärmeaustauscher 174 zugeführten Luft — beim Ausführungsbeispiel der Raumluft — erhöht sich die vom Wärmeaustauscher 174 an diese Luft abgegebene Wärmeleistung. Daher steht dann durchschnittlich eine geringere Wärmeleistung zur Erwärmung von Kaltwasser im Verflüssiger 52 zur Verfügung, wodurch aufgrund der Wirkung der beschriebenen Regelung die Menge der dem Speicherbehälter 226 zwischen aufeinanderfolgenden Nachspülvorgängen zugeführten Wassermenge verringert wird. Beim folgenden Nachspülvorgang wird daher der Speicherbehälter 226 unter den der erwähnten Restmenge entsprechenden Flüssigkeitsstand entleert. Damit dann trotzdem den Düsen 40 die erforderliche Menge von Nachspülwasser zugeführt werden kann, spricht beim Unterschreiten des der Restmenge entsprechenden Flüssigkeitsstandes ein Druckwächter 264 an, der den Magneten 266 eines Ventils 268 sowie bei vorhandenem Signal auf dem Kanal 236 den Magneten 242 des Ventils 244 betätigt. Die Ventile 244, 268 liegen eingangsseitig dem Ventil 160 parallel, und der Ausgang des Ventils 244 ist mit dem Ausgang des Rückschlagventils 246 verbunden, während der Ausgang des Ventils 268 zum Speicherbehälter 226 führt. Bei geöffnetem Ventil 244 über dieses fließendes Kaltwasser wird somit anstelle von aus dem Speicherbehälter 226 entnommenem Wasser über den Durchlauferhitzer 166 und die Pumpe 240 den Düsen 40 zugeführt, wobei der Durchlauferhitzer 166 für die nun erforderliche Erhitzung auf die gewünschte Nachspültemperatur von 90°C durch Fremdenergiezufuhr sorgt. Über das Ventil 268 strömt dem Speicherbehälter 226 so lange Kaltwasser zu, bis der der Restmenge entsprechende Wasserstand im Speicherbehälter 226 wieder überschritten wird; eine Schalthysterese des Druckwächters 264, die beispielsweise 5% bis 10% des maximalen Flüssigkeitsstands im Speicherbehälter 226 entspricht, sorgt dafür, daß das Entleeren des Speicherbehälters 226 unter den der Restmenge entsprechenden Wasserstand und das anschließende Wiederauffüllen zwischen zwei aufeinanderfolgenden Nachspülvorgängen auch bei extremem Störgrößeneinfluß (niedrige Raumtemperatur) während einer größeren Anzahl von Taktschritten allenfalls einige wenige Male erfolgt.

In Fig. 7 liegen wie in Fig. 1 parallel zum Ventil 58 und dem Entspannungsventil 60 das Ventil 90 und die Drossel 88. Der Parallelweg mit der Drossel 88 ist bei der Spülmaschine 14 und der zugehörigen Wärmepumpe 10 gemäß Fig. 7 nur bei außergewöhnlichen Ansprüchen an die Flexibilität der Wärmeabgabe der Wärmepumpe 10 erforderlich, beispielsweise weil stark wechselnde Umgebungstemperaturen zu erwarten sind. In anderen Fällen kann der Parallelweg mit der Drossel 88 entfallen.

Die Drossel 88 in Fig. 7 dient wie beim Ausführungsbeispiel nach Fig. 1 dazu, die von der Wärmepumpe 10 abgegebene Wärmeleistung durch Verschlechterung von deren Wirkungsgrad im Bedarfsfall zu verringern, in Fig. 7 jedoch nur dann, wenn die Regelung der Kaltwasserströmung zum Verflüssiger 52 nicht zu dem gewünschten Zweck ausreicht.

Zur Steuerung der Umschaltung von dem Entspannungsventil 60 auf die Drossel 88 ist im Speicherbehälter 226 ein Schwimmer 270 vorgesehen, der über einen schwenkbar gelagerten Hebelarm 272 einen Schalter 274 dann betätigt, wenn der Wasserstand im Speicherbehälter 226 bis zu der vom Überlaufrohr 262 bestimmten maximalen Höhe angestiegen ist. Nun muß jedoch nicht jede vollständige Befüllung des Speicherbehälters 226 bis zum maximalen Füllstand eine zusätzliche Leistungsdrosselung der Wärmepumpe 10 bewirken, da diese maximale Befüllung auch bei normalem Betrieb jeweils zeitlich unmittelbar vor dem Beginn eines Nachspülvorganges auftreten kann und sogar soll. Ein Wirksammachen der Drossel 88 ist nur dann erforderlich, wenn der maximale Füllstand bereits um mehr als einen vorgegebenen Zeitabstand vor dem Beginn eines Nachfüllvorganges erreicht wird, oder mit Rücksicht auf den taktmäßigen Betrieb der Spülmaschine: wenn der Schalter 274 bereits vor Ablauf einer vorgegebenen, gegenüber dem zeitlichen Abstand aufeinanderfolgender Nachspülvorgänge geringeren Verzögerungszeit nach dem Ende eines Nachspülvorganges betätigt wird. Man könnte eine entsprechende logische Schaltung mit einem von der Rückflanke des Signals auf dem Kanal 236 in Gang gesetzten Zeitglied, das nach Ablauf der Verzögerungszeit ein Ausgangssignal erzeugt, und mit einem vom Ausgangssignal des Schalters 274 und von dem invertierten Ausgangssignal des Zeitglieds beaufschlagten UND-Glied vorsehen, um in Abhängigkeit von dessen Ausgangssignal den Magneten 122 anstelle des Magneten 118 zu speisen. Beim Ausführungsbeispiel ist eine demgegenüber noch vorteilhaftere Lösung gewählt, indem das Ausgangssignal des Schalters 274 einem Integrator 276 mit einem nachgeschalteten Schwellwertschalter 278 zugeführt ist; das Ausgangssignal des Integrators 276 erreicht die Schaltschwelle des Schwellwertschalters 278 vor Beginn eines Nachspülganges nur dann, wenn zuvor der Schalter 274 während einer genügend langen, mindestens dem o.g. Zeitabstand gleichen Zeitdauer ein Ausgangssignal erzeugt hat. Der Integrator 276 ist in üblicher Weise mit einem über einen Ladewiderstand aufladbaren Kondensator ausgebildet, der über einen gegenüber dem Ladewiderstand höheren Widerstand entladbar ist, so daß der Integrator 276 ein Verschwindsignal erzeugt. Hierbei kann durch gegenüber der Ladezeitkonstanten unterschiedliche Bemessung der Entladezeitkonstanten erreicht werden, daß der Integrator 276 beim Erscheinen eines Ausgangssignals des Schalters 274 während eines Takts der Spülmaschine 14 berücksichtigt, ob und wie lange der Schalter 274 während eines vorausgegangenen Taktes bereits ein Ausgangssignal erzeugt hat, um ggf. schneller als bei erstmaligem Auftreten des Ausgangssignals des Schalters 274 den Schwellwertschalter 278 zu betätigen.

Gewünschtenfalls kann das Volumen des Speicherbehälters 226 auch größer als beim Ausführungsbeispiel gewählt werden, so daß er wesentlich mehr als die für einen einzelnen Nachspülvorgang erforderliche Wassermenge fassen kann. In diesem Fall wird man anstelle des Schwimmers 270, des Hebels 272 und des Schalters 274 andere Mittel vorsehen, mittels deren sich feststellen läßt, ob zwischen aufeinanderfolgenden Nachspülvorgängen mehr als diejenige Wassermenge den Verflüssiger 52 durchströmt, die für einen einzelnen Nachspülvorgang erforderlich ist, beispielsweise einen in die Leitung 224 eingeschalteten Durchflußmesser mit nachgeschaltetem, von der Rückflanke des Signals auf dem Kanal 236 auf Null zurücksetzbaren Integrator, dessen Ausgangssignal die Menge des seit Beendigung des jeweils vorangegangenen Nachspülvorganges im Verflüssiger 52 erhitzten Wasser anzeigt.

Wie bereits erläutert, befinden sich zwischen der zweiten Spülkammer 18 und der Nachspülkammer 20 sowie zwischen letzterer und der Trockenkammer 170 Türen, die nur beim Transport von Wagen 168 von einer Kammer in die jeweils nächste geöffnet werden. Diese Türen bewirken jedoch keine vollständige Abdichtung, damit einerseits Nachspülwasser aus der Kammer 20 in die zweite Spülkammer 18 fließen kann und damit andererseits Warmluft aus der Trockenkammer 170 durch die Nachspülkammer 20 hindurch in die Spülkammern 16, 18 gelangen kann, wodurch die Absaugung von Dampf-Warmluft-Gemisch aus letzteren erleichtert wird. Vorzugsweise werden jedoch die die Förderleistung der Warmluft zur Trockenkammer 170 fördernden Gebläse 172 so groß bemessen, daß sich unter Berücksichtigung des über die Kammern 20, 18, 16 zum Verdampfer 62 abgeführten Luftstroms in der Trockenkammer 170 ein Überdruck einstellt. An der Oberseite der Trockenkammer 170 ist eine nicht gezeigte Klappenanordnung vorgesehen, die sich bei einem vorgegebenen Überdruck öffnet und Warmluft aus der Trockenkammer 170 entweichen läßt, um allzu hohe Werte des Überdrucks in der Trockenkammer 170 zu vermeiden, die die Zufuhr weiterer Warmluft mittels der Gebläse 172 behindern würden. Die entweichende Warmluft kann, wie durch eine gestrichelte Verbindung zur Klimaanlage 186 angedeutet, gewünschtenfalls letzterer zugeführt werden, um neben der vom Verdampfer 62 herangeführten Kaltluft zur Raumklimatisierung mitverwendet zu werden.

## Patentansprüche

1. Wärmerückgewinnungseinrichtung für eine Spülanlage (14) mit mindestens einer Spülkammer (16, 18; 140, 16, 18; 140, 18) und einer Nachspülkammer (20), in der das in der Spülkammer (16, 18; 140, 16, 18; 140, 18) gereinigte Spülgut (168) taktweise mit Heißwasser nachgespült wird, umfassend einen Verdichter (50) für ein Arbeitsmittel, einen Verflüssiger (52), durch dessen Primärseite das vom Verdichter (50) komprimierte und erhitzte Arbeitsmittel strömt und dessen Sekundärseite zur Erzeugung des Heißwassers mit zu erwärmendem Frischwasser von gegenüber der Siedetemperatur des Arbeitsmittels geringerer Temperatur gespeist ist, ein in den Strömungsweg des Arbeitsmittels hinter dem Verflüssiger (52) eingeschaltetes erstes Drosselorgan (60) zur Entspannung und Temperaturabsenkung des Arbeitsmittels, einen mit seiner Primärseite zwischen dem ersten Drosselorgan (60) und dem Verflüssiger (52) in den Strömungsweg des Arbeitsmittels eingeschalteten Verdampfer (62), dessen Sekundärseite von dem aus der Spülanlage (14) entweichenden Dampf-Warmluft-Gemisch zu dessen Entwärmung beaufschlagt ist, einen Durchlauferhitzer (166) für das erwärmte Frischwasser und einen Speicherbehälter (226), dadurch gekennzeichnet, daß die Strömung des zu erwärmenden Frischwassers in Abhängigkeit vom Druck des Arbeitsmittels am Eingang des Verflüssigers (52) regelbar, der Speicherbehälter (226) unmittelbar an die Sekundärseite des Verflüssigers (52) angeschlossen und der Durchlauferhitzer (166) zwischen dem Speicherbehälter (226) und der Nachspülkammer (20) eingeschaltet sowie nach seiner Ausgangstemperatur geregelt ist, und daß in Abhängigkeit von einem Mindestwasserstand im Speicherbehälter (226) diesem und/oder der von ihm zur Nachspülkammer (20) führenden Leitung Frischwasser zuführbar ist.

2. Wärmerückgewinnungseinrichtung nach Patentanspruch 1, gekennzeichnet durch einen Regler (230), der in Abhängigkeit vom Druck des Arbeitsmittels am Eingang des Verflüssigers (52) und einem vorgegebenen Sollwert dieses Drucks die Strömung des zu erwärmenden Frischwassers kontinuierlich regelt.

3. Wärmerückgewinnungseinrichtung nach Patentanspruch 1 oder 2, dadurch gekennzeichnet, daß die Zufuhr von Frischwasser zu dem Speicherbehälter (226) abschaltbar ist, wenn der Wasserstand eine gegenüber dem Mindestwasserstand höhere, jedoch gegenüber dem höchsten möglichen Wasserstand geringere Höhe erreicht.

4. Wärmerückgewinnungseinrichtung nach einem der Patentansprüche 1 bis 3, dadurch gekennzeichnet, daß der höchste mögliche Wasserstand im Speicherbehälter (226) von einem Überlauf (262) bestimmt ist, über den überschüssiges erwärmtes Frischwasser abläuft.

5. Wärmerückgewinnungseinrichtung nach einem der Patentansprüche 1 bis 4, dadurch gekennzeichnet, daß parallel zum ersten Drosselorgan (60) ein zweites Drosselorgan (88) mit erheblich geringerem Durchtrittsquerschnitt im Strömungsweg des Arbeitsmittels angeordnet ist.

6. Wärmerückgewinnungseinrichtung nach einem der Patentansprüche 1 bis 5 für eine Spülanlage (14) mit einer Trockenkammer (170), in der nach der Reinigung des Spülguts (168) dessen zumindest teilweise Trocknung durch Warmluftzufuhr erfolgt, wobei vorzugsweise die Förderung des Spülguts (168) durch die Spülkammer (16, 18), die Nachspülkammer (20) und die Trockenkammer (170) hindurch sowie die Zufuhr der Warmluft taktweise erfolgen, dadurch gekennzeichnet, daß zwischen den Verdichter (50) und den Verflüssiger (52) ein weiterer Wärmetauscher (174) geschaltet ist, dessen Primärseite vom Arbeitsmittel und dessen Sekundärseite von vorzugsweise dem die Spülanlage (14) umgebenden Raum entnommener, der Trockenkammer (170) als Warmluft zugeführter Luft durchströmt sind, wobei das dem Verdampfer (62) zugeführte Dampfluft-Gemisch zumindest teilweise einer bezüglich der Förderrichtung des Spülguts (168) vor der Trockenkammer (170) liegenden Spülkammer (16, 18) entnommen ist.

7. Wärmerückgewinnungseinrichtung nach Patentanspruch 6, dadurch gekennzeichnet, daß die Förderleistung mindestens eines die Warmluft zur Trockenkammer (170) fördernden Gebläses (172) unter allen Betriebsbedingungen so groß bemessen ist, daß sich in der Trockenkammer (170) ein Überdruck gegenüber allen übrigen Kammern (16, 18, 20) einstellt, wobei vorzugsweise an der Trockenkammer (170) eine sich bei Überdruck gegenüber dem Umgebungsdruck öffnende Verschlußvorrichtung, vorzugsweise eine Klappenanordnung, vorgesehen ist.

8. Wärmerückgewinnungseinrichtung nach einem der Patentansprüche 6 oder 7, dadurch gekennzeichnet, daß die vom Verdampfer (62) entwärmte und entfeuchtete Luft und/oder aus der Trockenkammer (170) entweichende Warmluft einer Klimaanlage (186) zugeführt sind.

9. Wärmerückgewinnungseinrichtung nach einem der vorangehenden Patentansprüche für eine eine Eingabestelle (22) und Ausgabestelle (24) aufweisende Spülanlage (14), wobei zwischen der Eingabestelle (22) und der Ausgabestelle (24) und dem Inneren der Spülanlage (14) jeweils Verschlußelemente angeordnet sind und wobei das oberhalb der Eingabestelle (22) und der Ausgabestelle (24) abgesaugte Dampf-Warmluft-Gemisch dem Verdampfer (62) zugeführt wird, dadurch gekennzeichnet, daß an den Einlässen (68, 70) des das Dampf-Warmluft-Gemisch führenden Kanals (64, 66) ein den Durchsatz des Gemisches beeinflussendes Element, vorzugsweise ein Ventilator (74, 76), angeordnet ist, das in Abhängigkeit vom geöffneten Zustand des Verschlußelementes die Absaugung durch den Kanal (64, 66) hindurch freigibt oder unterstützt.

10. Wärmerückgewinnungseinrichtung nach einem der vorangehenden Patentansprüche, dadurch gekennzeichnet, daß der Durchtrittsquerschnitt des ersten Drosselorgans (60) in Abhängigkeit von der Temperatur des Arbeitsmittels am Ausgang des Verdampfers (62) veränderlich ist.

11. Wärmerückgewinnungseinrichtung nach einem der vorangehenden Patentansprüche, dadurch gekennzeichnet, daß der Durchtrittsquerschnitt des ersten Drosselorgans (60) zusätzlich in Abhängigkeit vom Druck des Arbeitsmittels am Ausgang des Verdampfers (62) veränderlich ist.

12. Wärmerückgewinnungseinrichtung nach einem der vorangehenden Patentansprüche, dadurch gekennzeichnet, daß der Verflüssiger (52) einen Hauptkondensator (54) und einen Hilfskondensator (56) umfaßt, deren vom Arbeitsmittel durchströmte Primärseiten unmittelbar hintereinander geschaltet sind, daß das zu erwärmende Frischwasser durch die Sekundärseite des Hilfskondensators (56) geführt ist und daß durch die Sekundärseite des Hauptkondensators (54) eine zu erwärmende Reinigungsflotte (38) der Spülkammer (14, 16; 140, 16, 18; 140, 18) geführt ist.

13. Wärmerückgewinnungseinrichtung nach Patentanspruch 12, dadurch gekennzeichnet, daß das zweite Drosselorgan (88) in Abhängigkeit vom Überschreiten eines vorgegebenen ersten Schwellenwertes der gemessenen Temperatur der zu erwärmenden Reinigungsflotte (38) am Ausgang des Verflüssigers (52) in den Strömungsweg des Arbeitsmittels einschaltbar ist.

14. Wärmerückgewinnungseinrichtung nach Patentanspruch 13, dadurch gekennzeichnet, daß in Abhängigkeit vom Überschreiten eines gegenüber dem ersten Schwellenwert höheren weiteren Schwellenwerts der Temperatur der erwärmten Reinigungsflotte (38) am Ausgang des Verflüssigers (52) der Verdichter (50) abschaltbar ist.

15. Wärmerückgewinnungseinrichtung nach Patentanspruch 13 oder 14, dadurch gekennzeichnet, daß in Abhängigkeit vom Überschreiten eines gegenüber dem ersten Schwellenwert höheren weiteren Schwellenwerts der Temperatur der Flüssigkeit am Ausgang des Verflüssigers (52) der diesem zugeführten Flüssigkeit vorzugsweise dem Wasserleitungsnetz entnommenes Kaltwasser zumischbar ist.

16. Wärmerückgewinnungseinrichtung nach Patentanspruch 15, dadurch gekennzeichnet, daß die Spülkammer (18; 140, 18) einen untenliegenden Behälter (36; 142, 36) für die Reinigungsflotte (38) aufweist, dem das Kaltwasser an einer von der Entnahmestelle der dem Verflüssiger (52) zugeführten Reinigungsflotte entfernten Stelle zuführbar ist.

17. Wärmerückgewinnungseinrichtung nach Patentanspruch 14, und nach einem der Patentansprüche 15 oder 16, dadurch gekennzeichnet, daß das Zumischen des Kaltwassers beim Überschreiten eines zweiten Schwellenwertes und das Abschalten des Verdichters (50) beim Überschreiten eines gegenüber dem zweiten Schwellenwert höheren dritten Schwellenwertes erfolgt.

18. Wärmerückgewinnungseinrichtung nach einem der Patentansprüche 14 bis 17, dadurch gekennzeichnet, daß der beim Überschreiten des weiteren Schwellenwertes auslösbare Schaltvorgang in Abhängigkeit davon erfolgt, daß ein die Spülbereitschaft der Spülanlage (14) anzeigendes Signal, vorzugsweise ein das Nichtüberschreiten eines vorgegebenen Schwellenwertes der Temperatur der zu erwärmenden Flüssigkeit (38) am Eingang des Verflüssigers (52) anzeigendes Signal, vorliegt.

19. Wärmerückgewinnungseinrichtung nach einem der Patentansprüche 14 bis 18, dadurch gekennzeichnet, daß der beim Überschreiten des weiteren Schwellenwertes auslösbare Schaltvorgang in Abhängigkeit von einem von Hand eingebbaren Signal während einer mittels eines Zeitgliedes (134) vorgebbaren Verzögerungszeit reversierbar ist und daß nach Ablauf der Verzögerungszeit der Schaltvorgang nur bei einer erneuten Überschreitung des weiteren Schwellenwertes erfolgt, wobei vorzugsweise beim Durchlaufen von Spülgut (168) zwischen der Eingabestelle (22) und der Ausgabestelle (24) der Spülanlage (14) die Verzögerungszeit annähernd gleich der Laufzeit des Spülguts (168) ist.

20. Wärmerückgewinnungseinrichtung nach einem der Patentansprüche 14 bis 19, dadurch gekennzeichnet, daß die Erzeugung von Signalen, die das Überschreiten des ersten Schwellenwertes und mindestens eines weiteren Schwellenwertes anzeigen, mittels eines einzigen Thermostaten (82) mit einer entsprechend dem Schwellenwerten gleichen Anzahl von Kontaktsätzen erfolgt, der jeweils beim Überschreiten eines Schwellenwerts einen diesem zugeordneten Kontaktsatz betätigt.

21. Wärmerückgewinnungseinrichtung nach einem der vorangehenden Patentansprüche für eine Spülanlage (14) mit mindestens zwei vom Spülgut (168) nacheinander durchlaufenen Spülkammern (140, 16, 18) mit jeweils untenliegendem Reinigungsflotten-Behälter (142, 34, 36), wobei Spülgut (168) von der Eingabestelle (22) auf einem vorzugsweise horizontalen und geradlinigen Förderweg durch die Spülkammern (140, 16, 18) hindurch zu einer Ausgabestelle (24) läuft und die Reinigungsflottentemperatur von Behälter (142, 34, 36) zu Behälter zur Ausgabestelle (24) hin jeweils höher liegt, dadurch gekennzeichnet, daß zusätzlich zu dem ersten Arbeitsmittelkreislauf (10—1) mit Verflüssiger (52) und Verdampfer (62) ein gleichartig ausgebildeter zweiter Kreislauf (10—2) vorgesehen ist, daß dem Verdampfer (62) des ersten, vorzugsweise oberhalb der Kammern (18, 20) nahe der Ausgabestelle (24) angeordneten Kreislaufs (10—1) nahe der Ausgabestelle (24) abgesaugtes Dampf-Warmluft-Gemisch zuführbar ist, daß die vom Verflüssiger (52) des ersten Kreislaufs (10—1) zu erwärmende Reinigungsflotte (38) dem Behälter (142) einer bezüglich der Förderrichtung des Spülguts vor der zuletzt vom Spülgut durchlaufenen Kammer (20) liegenden, vorzugsweise der zuerst durchlaufenen Kammer (140) entnommen ist und vorzugsweise in dieselbe Kammer (140) zurückströmt, daß dem Verdampfer (62) des zweiten, vorzugsweise oberhalb der Kammern (140, 16) nahe der Eingabestelle (22) angeordneten Kreislaufs (10—2) nahe der Eingabestelle (22) abgesaugtes Dampf-Warmluft-Gemisch zuführbar ist und daß die vom Verflüssiger (52) des zweiten Kreislaufs (10—2) zu erwärmende Reinigungsflotte (38) dem Behälter (36) einer bezüglich der Förderrichtung des Spülguts nach der zuerst vom Spülgut durchlaufenen Kammer (140) liegenden, vorzugsweise der zuletzt durchlaufenen, einen Behälter (36) aufweisenden Kammer (18), entnommen ist und vorzugsweise in dieselbe Kammer (18) zurückströmt.

22. Wärmerückgewinnungseinrichtung nach Patentanspruch 21, dadurch gekennzeichnet, daß die die Verflüssiger (52) mit jeweils einem Behälter (142, 36) verbindenden Leitungen (80—1, 84—1; 80—2, 84—2) jeweils innerhalb einer Kammer (140; 18) vertikal verlaufen, nahe der Oberseite der Kammer (140; 18) durch deren Wandung hindurch horizontal nach außen geführt sind, in horizontaler Richtung gemeinsam in einem an der oberen Außenseite der Kammern (140, 16, 18) gebildeten Kanal von vorzugsweise rechteckigem Querschnitt verlegt sind, nahe dem zugeordneten Verflüssiger (52) in horizontaler Richtung ins Innere einer unterhalb des Verflüssigers (52) liegenden Kammer (18; 140) verlaufen und durch deren Oberseite hindurch vertikal nach oben zu dem zugeordneten Verflüssiger (52) geführt sind.

23. Wärmerückgewinnungseinrichtung nach einem der vorangehenden Patentansprüche für eine Spülanlage (14) mit mindestens zwei vom Spülgut (168) nacheinander durchlaufenen Spülkammern (140, 18, 144) mit jeweils untenliegendem Reinigungsflotten-Behälter (142, 36, 146), wobei die Behälter (142, 36, 146) nicht in Flüssigkeitsverbindung stehen und vorzugsweise zwischen in Förderrichtung des Spülguts (168) hintereinander liegenden, Behälter (142, 36, 146) aufweisenden Kammern (140, 18, 144) behälterlose Zonen (150, 20) zur zumindest teilweisen Entfernung der Reinigungsflotte (38) der vorangegangenen Kammer (140, 18) vom Spülgut (168) aufweisen, dadurch gekennzeichnet, daß die erwärmte Reinigungsflotte (38) zu dem Behälter (36) mit dem höchsten Wärmeleistungsbedarf geführt und vorzugsweise auch vor ihrer Erwärmung aus diesem Behälter (36) entnommen ist und daß in mindestens einem und vorzugsweise allen übrigen Behältern (38, 146) Wärmeaustauschmittel, vorzugsweise Rohrschlangen (152, 154), liegen, die in die die erwärmte Reinigungsflotte (38) zum Behälter (36) mit dem höchsten Wärmeleistungsbedarf führende Leitung (84) eingeschaltet sind, wobei im Falle von mehr als zwei vorgesehenen Behältern (142, 36, 146) vorzugsweise die Wärmeaustauschmittel (152, 154) in der Reihenfolge durchströmbar sind, die einem abnehmenden Wärmebedarf der jeweiligen Kammern (140, 144) entspricht.

**Claims**

1. Heat recovery unit for a washing installation (14) having at least one washing chamber (16, 18; 140, 16, 18; 140, 18) and an after-washing chamber (20) in which the material (168) cleaned in the washing chamber (16, 18; 140, 16, 18; 140, 18) is after-washed rhythmically in hot water, comprising a compressor (50) for an operating medium, a liquefier (52), through the input end of which flows the operating medium which has been compressed and heated in the compressor (50) and the secondary end of which is supplied with fresh water, at a lower temperature than the boiling temperature of the operating medium, to be heated for the production of the hot water, a first throttle element (60) fitted in the flow path of the operating medium beyond the liquefier (52) for expanding and reducing the temperature of the operating medium, an evaporator (62) fitted in the flow path of the operating medium with its input end between the first throttle element (60) and the liquefier (52) and into the secondary end of which the mixture of steam and hot air coming from the washing installation (14) is admitted to heat it, an instantaneous water heater (166) for the heated fresh water and a storage vessel (226), characterised by the fact that the flow of the fresh water to be heated can be regulated in conformity with the pressure of the operating medium at the inlet of the liquefier (52), that the storage vessel (226) is connected directly to the secondary end of the liquefier (52), that the instantaneous water heater (166) is fitted between the storage vessel (226) and the after-washing chamber (20) and is regulated in conformity with its output temperature and that, depending upon a minimum water level in the storage vessel (226), fresh water can be fed to the storage vessel (226) and/or to the conduit running from it to the after-washing chamber (20).

2. Heat recovery unit in accordance with Patent Claim 1, characterized by a regulator (230) which continuously controls the flow of the fresh water to be heated in relation to the pressure of the operating medium at the inlet to the liquefier (52) and to a pre-set nominal value for this pressure.

3. Heat recovery unit in accordance with Patent Claim 1 or 2, characterised by the fact that the supply of fresh water to the storage vessel (226) can be cut off when the water level reaches a level higher than the minimum water level but lower than the maximum possible water level.

4. Heat recovery unit in accordance with one of Patent Claims 1 to 3, characterised by the fact that the maximum possible water level in the storage vessel (226) is determined by an overflow (262) through which excess heated fresh water runs off.

5. Heat recovery unit in accordance with one of Patent Claims 1 to 4, characterised by the fact that a second throttle element (88) with a considerably smaller passage cross-section is located in the flow path of the operating medium parallel to the first throttle element (60).

6. Heat recovery unit in accordance with one of Patent Claims 1 to 5 for a washing installation (14) having a drying chamber (170) in which, after the material (168) has been cleaned, it is at least partly dried by a hot air supply, the movement of the material (168) through the washing chamber (16, 18), the after-washing chamber (20) and the drying chamber (170), and the supply of hot air preferably taking place rhythmically, characterised by the fact that a further heat exchanger (174) is inserted between the compressor (50) and the . liquefier (52), the input end of which further heat exchanger (174) is traversed by the operating medium and the secondary end by air, preferably taken from the space surrounding the washing installation (14), which is fed as hot air to the drying chamber (170), the mixture of steam and air supplied to the evaporator (62) being at least partly taken from a washing chamber (16, 18) located upstream of the drying chamber (170) relative to the direction of movement of the material (168) being washed.

7. Heat recovery unit in accordance with Patent Claim 6, characterised by the fact that the capacity of at least one blower (172) feeding the hot air to the drying chamber (170) is designed to be large enough to ensure, in all operating conditions, that, relative to all other chambers (16, 18, 20), an excess pressure is set up in the drying chamber (170), provision being preferably made for a closing device at the drying chamber (170), preferably a flap arrangement, which opens when the pressure exceeds the ambient pressure.

8. Heat recovery unit in accordance with one of Patent Claims 6 or 7, characterised by the fact that the air from which the heat and moisture has been extracted by the evaporator (62) and/or the hot air emanating from the drying chamber (170) is passed to an air-contioning unit (186).

9. Heat recovery unit in accordance with one of the preceding Patent Claims for a washing installation (14) having an input point (22) and an output point (24), wherein, between the input point (22) and the output point (24), and the interior of the washing installation (14), closing elements are fitted, and wherein the mixture of steam and hot air extracted above the input point (22) and the output point (24) is fed to the evaporator (62), characterised by the fact that, at the inlets (68, 70) to the duct (64, 66) carrying the mixture of steam and hot air, there is an element, preferably a fan (74, 76), which influences the through flow of the mixture and, depending on the closing element being in its open state, permits or intensifies extraction through the duct (64, 66).

10. Heat recovery unit in accordance with one of the preceding Patent Claims, characterised by the fact that the passage cross-section of the first throttle element (60) can be modified relative to the temperature of the operating medium at the outlet of the evaporator (62).

11. Heat recovery unit in accordance with one of the preceding Patent Claims, characterised by the fact that the passage cross-section of the first throttle element (60) can additionally be modified relative to the pressure of the operating medium at the outlet of the evaporator (62).

12. Heat recovery unit in accordance with one of the preceding Patent Claims, characterised by the fact that the liquefier (52) comprises a main condenser (54) and an auxiliary condenser (56) of which the input ends, through which the operating medium flows, are located immediately behind one another, that the fresh water to be heated is passed through the secondary end of the auxiliary condenser (56) and that a cleansing solution (38), which is to be heated, is passed through the secondary end of the main condenser (54) to the washing chamber (14, 16; 140, 16, 18; 140, 18).

13. Heat recovery unit in accordance with Patent Claim 12, characterised by the fact that, depending upon the exceeding of a pre-determined first threshold value of the measured temperature of the cleansing solution (38), which is to be heated, at the outlet of the liquefier (52), the second throttle element (88) can be switched into the flow path of the operating medium.

14. Heat recovery unit in accordance with Patent Claim 13, characterised by the fact that, depending upon the exceeding of a further threshold value, which is higher in comparision with the first threshold value, of the temperature of the heated cleansing solution (38) at the outlet of the liquefier (52), the compressor (50) can be switched off.

15. Heat recovery unit in accordance with Patent Claim 13 or 14, characterised by the fact that, depending upon the exceeding of a further threshold value, which is higher in comparison with the first threshold value, of the temperature of the liquid at the outlet of the liquefier (52), cold water, preferably drawn from the mains, can be mixed with the liquid fed to it.

16. Heat recovery unit in accordance with Patent Claim 15, characterised by the fact that the washing chamber (18; 140, 18) has, at the bottom, a container (36; 142, 36) for the cleansing solution (38) to which the cold water can be fed at a point remote from that from which the cleansing solution passed to the liquefier (52) is drawn.

17. Heat recovery unit in accordance with Patent Claim 14 and in accordance with one of Patent Claims 15 or 16, characterised by the fact that the addition of cold water takes place when a second threshold value is exceeded and that the compressor (50) is switched off when a third threshold value, higher in comparison with the second threshold value, is exceeded.

18. Heat recovery unit in accordance with one of Patent Claims 14 to 17, characterised by the fact that the switching operation triggered by the exceeding of the further threshold value takes place in dependence upon the presence of a signal indicating that the washing installation (14) is ready to operate, this signal preferably being one which indicates the non-exceeding of a pre-set threshold value of the temperature of the liquid (38) to be heated at the inlet of the liquefier (52).

19. Heat recovery unit in accordance with one of Patent Claims 14 to 18, characterised by the fact that the switching operation triggered by the exceeding of the further threshold value can be reversed in conjunction with a signal which can be fed in manually during a delay period determinable by means of a timer (134) and that, after expiry of the delay period, the switching operation takes place only when the further threshold value is again exceeded, preferably where the material to be washed (168) passes from the input point (22) to the output point (24) of the washing installation (14), the delay period being approximately the same as the transit time of the material to be washed (168).

20. Heat recovery unit in accordance with one of Patent Claims 14 to 19, characterised by the fact that the generation of signals indicating that the first threshold value and at least one further threshold value have been exceeded is brought about by a single thermostat (82) having a number of sets of contacts corresponding to the number of threshold values and which, whenever a threshold value is exceeded, operates the set of contacts allocated thereto.

21. Heat recovery unit in accordance with one of the preceding Patent Claims for a washing installation (14) having at least two washing chambers (140, 16, 18) through which the material to be washed (168) passes in succession and each having, at the bottom, a container (142, 34, 36) for the cleansing solution, whereby the material to be washed (168) passes, preferably along a horizontal and straight conveyor path, from the input point (22) through the washing chambers (140, 16, 18) to an output point (24) and the temperature of the cleansing solution increases from container (142, 34, 36) to container towards the output point (24), characterised by the fact that, in addition to the first circuit of the operating medium (10—1) comprising the liquefier (52) and the evaporator (62) a second, similarly designed circuit (10—2) is provided, that a mixture of steam and hot air drawn from the vicinity of the output point (24) can be fed to the evaporator (62) of the first circuit (10—1) which is preferably located above the chambers (18, 20) close to the output point (24), that the cleansing solution (38) to be heated by the liquefier (52) of the first circuit (10—1) is taken from the container (142) of a chamber which, relative to the direction of movement of the material being washed, lies upstream of the last chamber (20) to be traversed by the material, preferably the first chamber (140) to be traversed, and preferably that it flows back into the same chamber (140), that a mixture of steam and hot air drawn from the vicinity of the input point (22) can be fed to the evaporator (62) of the second circuit (10—2) which is preferably located above the chambers (140, 16) close to the input point (22) and that the cleansing solution (38) to be heated by the liquefier (52) of the second circuit (10—2) is taken from the container (36) of a chamber (18) which, relative to the direction of movement of the material being washed, lies beyond the first chamber (140) to be traversed by the material, preferably the last chamber (18) to be traversed which has a container (36), and preferably that it flows back into the same chamber (18).

22. Heat recovery unit in accordance with Patent Claim 21, characterised by the fact that the conduits (80—1, 84—1; 80—2, 84—2) connecting each of the liquefiers (52) with a container (142, 36) run vertically inside each chamber (140; 18), pass horizontally to the outside through the wall thereof near the top of the chamber (140; 18), run together in a horizontal direction in a duct, preferably of rectangular cross-section, formed on the outside of the top of the chambers (140, 16, 18), pass near to the corresponding liquefier (52) in a horizontal direction into the interior of a chamber (18; 140) located beneath the liquefier (52) and are led vertically upwards through the top thereof to the corresponding liquefier (52).

23. Heat recovery unit in accordance with one of the preceding Patent Claims for a washing installation (14) having at least two washing chambers (140, 18, 144) through which the material to be washed (168) passes in succession and each having, at the bottom, a container (142, 36, 146) for the cleansing solution wherein the containers (142, 36, 146) are not in liquid connection with one another, and wherein preferably between chambers (140, 18, 144) located one behind the other in the direction of movement of the material (168) being washed and equipped with containers (142, 36, 146), zones (150, 20) devoid of containers are provided for the purpose of at least partial removal of the cleansing solution (38) of the preceding chamber (140, 18) from the material (168) being washed, characterised by the fact that the heated cleansing solution (38) is fed to the container (36) having the greatest thermal power requirement and also is preferably taken from this container (36) before being heated and that heat exchanging elements, preferably serpentine pipes (152, 154) are located in at least one and preferably in all other containers (38, 146) and are fitted in the conduit (84) carrying the heated cleansing solution (38) to the container (36) having the greatest thermal power requirement, wherein, in cases where more than two containers (142, 36, 146) are provided, it is preferable that the heat exchanging elements (152, 154) can be traversed in a sequence corresponding to a diminishing heat requirement of the individual chambers (140, 144).

**Revendications**

1. Appareil de récupération de chaleur destiné à une installation de lavage (14) comportant au moins une chambre de lavage (16, 18; 140, 16, 18; 140, 18) et une chambre de rinçage (20) dans laquelle on rince à l'eau chaude de façon rythmée les objets (168) nettoyés dans la chambre de lavage (16, 18; 140, 16, 18; 140, 18), appareil comprenant un compresseur (50) destiné à un fluide de travail, un liquéfacteur (52) dont le côté primaire est parcouru par le fluide de travail comprimé et chauffé par le compresseur (50) et dont le côté secondaire est alimenté, pour produire de l'eau chaude, par de l'eau fraîche à chauffer qui a une température inférieure au point d'ébullition du fluide de travail, un premier organe d'étranglement (60) interposé en aval du liquéfacteur (52) dans le parcours d'écoulement du fluide de travail pour détendre le fluide de travail et abaisser sa température, un évaporateur (62) dont le côté primaire est interposé dans le parcours d'écoulement du fluide de travail entre le premier organe d'étranglement (60) et le liquéfacteur (52) et dont le côté secondaire est alimenté par le mélange de vapeur et d'air chaud s'échappant de l'installation de lavage (14) de manière à lui emprunter de la chaleur, un chauffe-eau instantané (166) destiné à l'eau fraîche chauffée et un réservoir (226), appareil caractérisé par le fait que l'écoulement de l'eau fraîche à chauffer est réglable sous la dépendance de la pression du fluide de travail à l'entrée du liquéfacteur (52), que le réservoir (226) est raccordé directement au côté secondaire du liquéfacteur (52) et que le chauffe-eau instantané (166) est interposé entre le réservoir (226) et la chambre de rinçage (20) et réglé quant à sa température de sortie et que sous la dépendance d'un niveau minimal d'eau dans le réservoir (226), de l'eau fraîche peut être amenée à celui-ci et/ou au conduit qui va de celui-ci à la chambre de rinçage.

2. Appareil selon la revendication 1, caractérisé par un régulateur (230) qui règle de façon continue l'écoulement de l'eau fraîche à chauffer sous la dépendance de la pression du fluide de travail à l'entrée du liquéfacteur (52) et d'une valeur de consigne prescrite.

3. Appareil selon l'une des revendications 1 ou 2, caractérisé par le fait que l'amenée d'eau fraîche au réservoir (226) peut être coupée lorsque le niveau d'eau atteint une hauteur supérieure au niveau minimal d'eau mais inférieure au plus haut niveau d'eau possible.

4. Appareil selon l'une quelconque des revendications 1 à 3, caractérisé par le fait que le plus haut niveau d'eau possible dans le réservoir (226) est déterminé par un trop-plein (262) par lequel s'écoule un excès d'eau fraîche chauffée.

5. Appareil selon l'une quelconque des revendications 1 à 4, caractérisé par le fait qu'en parallèle au premier organe d'étranglement (60) est disposé dans le parcours d'écoulement du fluide de travail, un deuxième organe d'étranglement (88) ayant une section de passage notablement inférieure.

6. Appareil selon l'une des revendications 1 à 5, destiné à une installation de lavage (14) comportant une chambre de séchage (170) dans laquelle un séchage au moins partiel des objets (168) est effectué après leur nettoyage, par amenée d'air chaud, le transfert des objets (168) à travers la chambre de lavage (16, 18), la chambre de rinçage (20) et la chambre de séchage (170) ainsi que l'amenée d'air chaud s'effectuant préférablement de façon rythmée, appareil caractérisé par le fait qu'entre le compresseur (50) et le liquéfacteur (52) est branché un échangeur thermique supplémentaire (174) dont le côté primaire est parcouru par le fluide de travail et dont le côté secondaire est parcouru par de l'air de préférence extrait de l'espace entourant l'installation de lavage (14), amené en tant qu'air chaud à la chambre de séchage (170), le mélange de vapeur et d'air amené à l'évaporateur (62) étant extrait au moins en partie d'une chambre de lavage (16, 18) située en amont de la chambre de séchage (170) dans le sens de transport des objets (168).

7. Appareil selon la revendication 6, caractérisé par le fait que le débit d'au moins un ventilateur (172) amenant l'air chaud à la chambre de séchage (170) est assez grand pour qu'il s'établisse dans la chambre de séchage (170) une surpression relativement à toutes les autres chambres (16, 18, 20) et que de préférence, la chambre de séchage (170) est munie d'un dispositif d'obturation, de préférence d'une disposition de clapet, s'ouvrant lorsqu'il existe une surpression relativement à la pression ambiante.

8. Appareil selon l'une des revendications 6 ou 7, caractérisé par le fait que l'air appauvri en chaleur et en humidité par l'évaporateur (62) et/ou l'air chaud s'échappant de la chambre de séchage (170) sont conduits à une installation de climatisation (186).

9. Appareil selon l'une quelconque des revendications précédentes, destiné à une installation de lavage (14) présentant un poste d'introduction (22) et un poste d'extraction (24), des obturateurs étant disposés entre le poste d'introduction (22) et l'intérieur de l'installation de lavage (14) ainsi qu'entre le poste d'extraction (24) et l'intérieur de l'installation de lavage, le mélange de vapeur et d'air chaud aspiré au-dessus du poste d'introduction (22) et du poste d'extraction (24) étant conduit à l'évaporateur (62), appareil caractérisé par le fait qu'aux entrées (68, 70) du canal (64, 66) conduisant le mélange de vapeur et d'air chaud est disposé un élément influençant le débit du mélange, de préférence un ventilateur (74, 76) qui, sous la dépendance de l'état ouvert de l'obturateur, libère ou favorise l'aspiration à travers le canal (64, 66).

10. Appareil selon l'une quelconque des revendications 1 à 9, caractérisé par le fait que la section de passage du premier organe d'étranglement (60) est variable sous la dépendance de la température du fluide de travail à la sortie de l'évaporateur (62).

11. Appareil selon l'une quelconque des revendications 1 à 10, caractérisé par le fait que la section de passage du premier organe d'étranglement (60) est en outre variable sous la dépendance de la pression du fluide de travail à la sortie de l'évaporateur (62).

12. Appareil selon l'une quelconque des revendications 1 à 11, caractérisé par le fait que le liquéfacteur (52) comprend un condensateur principal (54) et un condensateur auxiliaire (56) dont les côtés primaires parcourus par le fluide de travail sont branchés directement en série, que l'eau fraîche à chauffer passe par le côté secondaire du condensateur auxilaire (56) et que par le côté secondaire du condenseur principal (54) passe un liquide de nettoyage à chauffer (38) de la chambre de lavage (14, 16; 140, 16, 18; 140, 18).

13. Appareil selon la revendication 12, caractérisé par le fait que le deuxième organe d'étranglement (88) peut être branché dans le parcours d'écoulement du fluide de travail sous la dépendance du dépassement d'un premier seuil prescrit de la température mesurée du bain de nettoyage à chauffer (38) à la sortie du liquéfacteur (52).

14. Appareil selon la revendication 13, caractérisé par le fait que le compresseur (50) peut être débranché sous la dépendance du dépassement d'un autre seuil de la température du liquide de nettoyage chauffé (38) à la sortie du liquéfacteur (52), supérieur au premier seuil.

15. Appareil selon l'une des revendications 13 ou 14, caractérisé par le fait que sous la dépendance du dépassement d'un autre seuil de la température du liquide à la sortie du liquéfacteur (52) supérieur au premier seuil, de l'eau froide, de préférence tirée du réseau de distribution d'eau, peut être mélangée au liquide amené au liquéfacteur.

16. Appareil selon la revendication 15, caractérisé par le fait que la chambre de lavage (18; 140, 18) présente un récipient (36; 142, 36) situé dans le bas, destiné au liquide de nettoyage (38) et auquel l'eau froide peut être amenée en un point éloigné du point de retrait du liquide de nettoyage amené du liquéfacteur (52).

17. Appareil selon la revendication 14, et selon l'une quelconque des revendications 15 ou 16, caractérisé par le fait que l'addition de l'eau froide s'effectue lors du dépassement d'un deuxième seuil et que le débranchement du compresseur (50) s'effectue lors du dépassement d'un troisième seuil supérieur au deuxième.

18. Appareil selon l'une quelconque des revendications 14 à 17, caractérisé par le fait que le processus de commutation pouvant être déclenché lors du dépassement de l'autre seuil s'effectue sous la dépendance du fait qu'il existe un signal indiquant que l'installation de lavage (14) est prête au lavage, de préférence un signal indiquant l'absence de dépassement d'un seuil prescrit de la température du liquide à chauffer (38) à l'entrée du liquéfacteur (52).

19. Appareil selon l'une quelconque des revendications 14 à 18, caractérisé par le fait que le processus de commutation pouvant être déclenché lors du dépassement de l'autre seuil est réversible sous la dépendance d'un signal pouvant être introduit manuellement, pendant un temps de retard pouvant être prescrit au moyen d'un organe de temps (134) et qu'après écoulement du temps de retard, le processus de commutation s'effectue seulement jusqu'à un nouveau dépassement de l'autre seuil et que de préférence lors du passage d'objets à laver (168) entre le poste d'introduction (22) at le poste d'extraction (24) de l'installation de lavage (14), le temps de retard est approximativement égal au temps de passage des objets (168).

20. Appareil selon l'une quelconque des revendications 14 à 19, caractérisé par le fait que les signaux qui indiquent le dépassement du premier seuil et d'au moins un autre seuil sont engendrés au moyen d'un seul thermostat (82) présentant des jeux de contacts en nombre égal à celui des seuils et qui actionne, chaque fois qu'un seuil est dépassé, un jeu de contacts correspondant à celui-ci.

21. Appareil selon l'une quelconque des revendications 1 à 20, destiné à une installation de lavage (14) munie d'au moins deux chambres de lavage (140, 16, 18) parcourues successivement par les objets (168) et présentant chacune dans le bas un récipient à liquide de nettoyage (142, 34, 36), des objets (168) se rendant du poste d'introduction (22) à un poste d'extraction (24) par un parcours de préférence horizontal et rectiligne traversant les chambres de lavage (140, 16, 18) et la température du bain de nettoyage étant chaque fois plus élevée d'un récipient à l'autre (142, 34, 36), appareil caractérisé par le fait qu'en plus du premier circuit de fluide de travail (10—1) avec liquéfacteur (52) et évaporateur (62) est prévu un deuxième circuit de constitution similaire (10—2), qu'à l'évaporateur (62) du premier circuit (10—1), de préférence disposé au dessus des chambres (18, 20) près du poste d'extraction (24) peut être amené un mélange de vapeur et d'air chaud aspiré près du poste d'extraction, que le liquide de nettoyage à chauffer (38) par le liquéfacteur (52) du premier circuit (10—1) est tiré du récipient (142) d'une chambre (140) située, dans le sens de transport des objets, avant la chambre (20) parcourue en dernier lieu par les objets, de préférence de la chambre parcourue la première et qu'il reflue de préférence à la même chambre (140), qu'à l'évaporateur (62) du deuxième circuit (10—2), de préférence disposé au-dessus des chambres (140, 16) près du poste d'introduction (22) peut être amené un mélange de vapeur et d'air chaud aspiré près du poste d'introduction (22) et que le liquide de nettoyage (38) à chauffer par le liquéfacteur (52) de deuxième circuit (10—2) est tiré du récipient (36) d'une chambre (18) munie d'un récipient (36) et située en aval de la chambre (140) parcourue en premier par les objets, dans le sens de transport, de préférence de la chambre parcourue en dernier lieu et que de préférence, il reflue à la même chambre (18).

22. Appareil selon la revendication 21, caractérisé par le fait que les tuyaux (80—1, 84—1; 80—2, 84—2) reliant les liquéfacteurs (52) à des récipients respectifs (142, 36) passent chacun verticalement à l'intérieur d'une chambre (140; 18), que près du haut de la chambre (140; 18) ils se dirigent horizontalement vers l'extérieur à travers la paroi de celle-ci, qu'ils sont posés conjointement en direction horizontale dans un canal formé sur le côté extérieur supérieur des chambres (140, 16, 18) et présentant de préférence une section rectangulaire, que près du liquéfacteur adjoint (52) ils arrivent en direction horizontale à l'intérieur d'une chambre (18; 140) située en-dessous du liquéfacteur (52) et qu'à travers le côté supérieur de celle-ci, ils se rendent verticalement vers le haut au liquéfacteur adjoint (52).

23. Appareil selon l'une quelconque des revendications 1 à 22, destiné à une installation de lavage (14) comportant au moins deux chambres de lavage (140, 18, 144) parcourues successivement par les objets à laver (168) et munies chacune d'un récipient à liquide de nettoyage (142, 36, 146) situé dans le bas, les récipients (142, 36, 146) n'étant pas en communication pour le liquide et présentant des zônes sans récipient (140, 20) situées de préférence entre des chambres (140, 18, 144) munies de récipients (142, 36, 146) et qui se font suite dans le sens de transport des objets (168), pour l'élimination au moins partielle du bain de nettoyage (38) de la chambre précédente (140, 18) qui se trouve sur les objets (168), appareil caractérisé par le fait que le bain de nettoyage chauffé (38) est conduit au récipient (36) ayant le plus grand besoin de puissance de chauffage, que de préférence il est retiré de ce récipient (36) avant même d'être chauffé et que dans au moins un autre récipient et de préférence dans tous les autres récipients (38, 146) sont situés des moyens d'échange thermique, de préférence des serpentins (152, 154) branchés dans la conduite (84) qui conduit le liquide de nettoyage chauffé (38) au récipient (36) qui a le plus grand besoin de puissance de chauffage, et que dans le cas où plus de deux récipients en tout sont prévus (142, 36, 146), les moyens d'échange thermique (152, 154) peuvent de préférence être parcourus dans l'ordre correspondant à un besoin de chaleur décroissant des chambres respectives (140, 144).

FIG. 1

FIG. 4

FIG. 6

FIG. 2

FIG. 3

FIG. 5

FIG. 7